# EUROPÄISCHE PATENTSCHRIFT

(11) **EP 2 262 864 B1**
(45) Veröffentlichungstag und Bekanntmachung des Hinweises auf die Patenterteilung: **03.08.2011**
(21) Anmeldenummer: 10703411.8
(22) Anmeldetag: 28.01.2010
(51) Int. Cl.: C09C 1/00, C09C 1/62, C09C 1/64

(54) **PVD-METALLEFFEKTPIGMENT MIT GRADIENT AN NANOSKALIGEN METALLTEILCHEN, VERFAHREN ZU DEREN HERSTELLUNG UND VERWENDUNG DERSELBEN**
PVD METAL EFFECT PIGMENT HAVING GRADIENT ON NANOSCALE METAL PARTICLES, METHOD FOR THE PRODUCTION THEREOF AND USE THEREOF
PIGMENT À EFFET MÉTALLIQUE OBTENU PAR DÉPÔT CHIMIQUE EN PHASE VAPEUR À GRADIENT SUR DES NANOPARTICULES MÉTALLIQUES, PROCÉDÉ DE PRODUCTION ASSOCIÉ ET LEUR UTILISATION

(30) Priorität: 28.01.2009 DE 102009006550
(43) Veröffentlichungstag der Anmeldung: 22.12.2010
(73) Patentinhaber: Eckart GmbH, 91235 Hartenstein (DE)
(72) Erfinder: GEISSLER, Bernhard, 90592 Schwarzenbruck (DE); HERZING, Wolfgang, 91233 Neunkirchen (DE); HENGLEIN, Frank, 90409 Nürnberg (DE); SCHNEIDER, Ralph, 91207 Lauf (DE); FISCHER, Martin, 92281 Königstein (DE)
(74) Vertreter: Walcher, Armin
(86) Internationale Anmeldenummer: PCT/EP2010/000515
(87) Internationale Veröffentlichungsnummer: WO 2010/086165

(56) Entgegenhaltungen:
- EP-A2- 0 874 026
- WO-A1-2009/012995
- WO-A2-2007/093401
- US-A- 4 430 366
- US-A- 5 766 827

## Beschreibung

Die vorliegende Erfindung betrifft ein plättchenförmiges PVD-Metalleffektpigment mit einer ersten und einer zweiten Außenfläche, wobei das plättchenförmige PVD-Metalleffektpigment wenigstens eine PVD-Schicht aufweist und die wenigstens eine PVD-Schicht Metalloxid und Cluster aus elementarem Metall aufweist, wobei der Gehalt an Clustern aus elementarem Metall in der ersten Außenfläche und in der zweiten Außenfläche des PVD-Metalleffektpigmentes voneinander verschieden ist und sich um wenigstens 10 Atom-% unterscheidet. Die Erfindung betrifft ferner die Verwendung dieser PVD-Metalleffektpigmente sowie deren Herstellung.

Metalleffektpigmente werden seit vielen Jahren in Beschichtungen zur Erzeugung eines metallischen Effektes eingesetzt.

Klassische Metalleffektpigmente bestehen aus plättchenförmigen Metallpigmenten, deren Wirkung auf der gerichteten Reflexion von einfallendem Licht an den flächig ausgebildeten und im jeweiligen Anwendungsmedium parallel ausgerichteten Metallpigmenten beruht.

Typische Anwendungsgebiete der Metalleffektpigmente sind die Lackindustrie, insbesondere die Automobilindustrie, die Druckindustrie und die Kunststoffindustrie.

Der Metallic-Effekt wird durch bestimmte Größen beschrieben. Diese sind u.a. die Brillanz, gekennzeichnet durch Sparkle und metallischen Glanz, die Helligkeit sowie der Flop, d.h. der Helligkeitsänderung in Abhängigkeit vom Einfalls- und/oder Betrachtungswinkel, und die Deckfähigkeit. Bei farbigen Metallicbeschichtungen kommt noch die Bunttonsättigung und der Farbflop ("two-tone") hinzu.

Der Glanz wird durch das Verhältnis von reflektiertem zu gestreutem Licht in Relation zu einem Standard bestimmt.

Der Metalleffekt wird wesentlich unter anderem von der Teilchenform und dem Formfaktor, d.h. dem Verhältnis von mittlerem Teilchendurchmesser zu mittlerer Teilchendicke der Pigmente, der Teilchendicke sowie von deren Oberflächenrauhigkeit, der Partikelgröße, der Teilchengrößenverteilung und von der Pigmentorientierung parallel zur Oberfläche eines Lackes oder Kunststoffes beeinflusst.

Während bei Metalleffektpigmentteilchen mit größeren Durchmessern und gleichmäßiger Form eine stärkere Reflexion auftritt, die sich in einer hohen metallischen Brillanz, einer verbesserten Helligkeit und starkem Flop äußert, ist der Streuanteil bei Pigmenten mit geringeren Teilchendurchmessern sehr hoch, was zu einer guten Deckung führt.

Die Deckfähigkeit wird jedoch vor allem durch die Dicke der Metallpigmente bestimmt. Je dünner die Metallpigmente sind, desto besser wird ihre spezifische Deckfähigkeit, also die auf das Gewicht bezogene Deckfähigkeit.

Es besteht ein großes Interesse seitens der Druck-, Lack-, Kunststoff- und Kosmetikindustrie an metallisch dunklen Metalleffektpigmenten.

Für höherwertige Anwendungen wurden besonders dünne Aluminiumeffektpigmente entwickelt, welche über PVD-Verfahren hergestellt werden.

Seit längerer Zeit sind Metalleffektpigmente, die durch PVD-Verfahren hergestellt werden, bekannt. Sie zeichnen sich durch extrem hohen Glanz, ein enormes Deckvermögen und einzigartige optische Eigenschaften aus. Bedingt durch ihre geringe Dicke von ca. 30 bis 70 nm und ihre extrem glatten Oberflächen neigen sie dazu, sich nach ihrer Applikation sehr dicht an den Untergrund anzuschmiegen. Dies führt bei einem sehr glatten Untergrund nahezu zu einem spiegelähnlichen Erscheinungsbild.

Kommerziell sind bisher von den reinen Metalleffektpigmenten lediglich Aluminiumeffektpigmente bekannt geworden. Beispiele hierfür sind Metalure^{®} (hergestellt von der Fa. Avery Dennison, vertrieben von Fa. ECKART), Decomet^{®} (Fa. Schlenk) oder Metasheen^{®} (Fa. Ciba).

Derartige Pigmente stehen für den Farbton "Silber" in seiner höchsten Ausführungsform.

Über PVD-Verfahren hergestellte Pigmente auf Basis metallischer Schichten werden in der US 2,839,378 näher beschrieben. Dort wird die Herstellung spiegelähnlicher Pigmente mit extrem dünnen Schichtdicken beschrieben, die auf ein Substrat, welches mit einer Trennschicht ("release layer") versehen ist, aufgedampft werden. Nach dem Aufbringen der Metallschichten und Ablösung des Films werden die Pigmente mittels mechanischer Beanspruchung auf die gewünschte Teilchengröße zerkleinert.

Die Anwendung derartig hergestellter Pigmente in Coating-Formulierungen wird detailliert in US 2,941,894 beschrieben. Dort werden die hohen Reflektivitäten, die niedrige Pigmentierungshöhe, d.h. eine niedrige Pigmentkonzentration im Anwendungsmedium, und das hohe spezifische Deckvermögen bzw. die spezifische Deckfähigkeit der Pigmente hervorgehoben.

Ein Verfahren zur Herstellung von metallischen Pigmenten mittels Aufdampfverfahren mit einer Dicke von 35 bis 45 nm wird in US 4,321,087 genauer beschrieben und beinhaltet das Aufbringen einer Trennschicht, den Metallisierungsprozess, den Ablösevorgang in einem Lösemittelbad, das Konzentrieren der abgelösten Partikel und die Ultraschallzerkleinerung auf die gewünschte Pigmentgröße.

In der WO99/35194 werden Pigmente mit einem dreischichtigen Aufbau beschrieben, bei welchen die Eigenfarbe einer intermediär liegenden Metallschicht durch zwei außenliegende dielektrische Stützschichten nicht verändert wird. Nachteilig ist bei diesem Herstellungsverfahren die Darstellung über drei aufzudampfende Schichten, um den Multilayeraufbau realisieren zu können, wodurch die Herstellungskosten stark erhöht werden.

In der EP 1 522 606 A1 wird die Herstellung einer Folie mit schwarzem Aluminiumoxid beschrieben. Hierbei werden weder Effektpigmente noch mehrschichtige Strukturen offenbart. Die hier offenbarten Folien weisen keinen nennenswerten Metalleffekt mit Glanz und Flop auf.

In der US 4,430,366 wird die Herstellung von Folien, die ein Gemisch aus Metall und Metalloxid enthalten, beschrieben. Hier sind ebenfalls keine Effektpigmente erwähnt.

WO 2007093401 A2 beschreibt dunkle metallische Effektpigmente aus einer Schicht mit weitgehend homogener Zusammensetzung an Sauerstoff und Metall.

Nachteilig ist, dass das Verfahren zur Herstellung dieser Effektpigmente aufwendig ist.

Die DE 69601432 T2 betrifft ein Verfahren zur thermischen Erzeugung eines Bildes auf einem Substrat, wobei eine sauerstoffhaltige schwarze Aluminiumschicht so aufgebracht wird, dass die Schicht eine optische Transmission von wenigstens 0,3 bei einer Wellenlänge zwischen 200 und 1100 nm hat. Dieses Dokument betrifft nicht die Bereitstellung von Effektpigmenten.

Die EP 1 144 711 B1 offenbart ein Verfahren zur Herstellung von reflektierenden Farbpigmenten, wobei auf eine Reflexionsschicht zumindest eine eine Farbänderung bewirkende Schicht aus einem transparenten Material mit einem Brechungsindex von größer als 1,8, üblicherweise Metalloxid, und einem lichtabsorbierenden Metall unter gleichzeitiger Verdampfung aufgebracht wird, wobei das lichtabsorbierende Metall und das Metall des Metalloxids voneinander verschieden sind. Das Verfahren ist prozesstechnisch sehr schwer zu steuern.

Die DE 10 2007 007 908 A1 offenbart dunkle metallische Effektpigmente, die nach PVD-Verfahren hergestellt werden. Sie weisen eine weitgehend homogene Zusammensetzung auf und besitzen einen relativ hohen Sauerstoffgehalt von 25 bis 58 Atom-%. Die Schicht ist dunkel, da das Metall in Form kleiner Metallcluster, die in Metalloxid dispergiert sind, vorliegt. Derartige Effektpigmente ergeben dunkle, jedoch hochglänzende Effektpigmente mit ausgeprägtem Hell-Dunkelflop. Das Verfahren zur Herstellung dieser PVD-Metalleffektpigmente mit homogener Zusammensetzung ist ebenfalls prozesstechnisch aufwendig und lässt nur geringe Produktionsgeschwindigkeiten zu.

Um den hohen Sauerstoffgehalt und die homogene chemische Zusammensetzung zu gewährleisten, ist es nötig, während des Beschichtungsvorgangs die Metallverdampfungsrate und die Sauerstoffzufuhrrate sowohl über die Breite als auch über die Länge des Beschichtungsbandes weitgehend zu kontrollieren. Dies erfordert insbesondere in einer Produktionsanlage einen sehr hohen Aufwand: so kann über die Bandbreite beispielsweise die Metallschichtdicke mittels Transmissionsmessungen in-situ gemessen und nachgeregelt werden. Sehr schwierig ist es jedoch, den Prozess über die gesamte Bedampfungszone, d.h. Breite und Länge des Bandes, zu kontrollieren.

Aufgabe der Erfindung ist es, neutrale, deckfähige, metallische, dezent farbige oder schwarze, spiegelartige Metalleffektpigmente mit bis zuweilen sehr hohem Hell-Dunkel-Flop bereitzustellen, die vorzugsweise einfach herzustellen sind.

Eine weitere Aufgabe besteht darin, ein kostengünstiges und einfaches Verfahren zur Herstellung derartiger Metalleffektpigmente zu finden. Die Pigmente sollen sich nach einem gut kontrollierbaren Verfahren herstellen lassen. Vorzugsweise soll das Verfahren auch hohe Produktionsgeschwindigkeiten ermöglichen.

Die der Erfindung zugrundeliegende Aufgabe wird durch Bereitstellung eines plättchenförmigen PVD-Metalleffektpigments mit einer ersten und einer zweiten Außenfläche gelöst, wobei das plättchenförmige PVD-Metalleffektpigment wenigstens eine PVD-Schicht aufweist und die wenigstens eine PVD-Schicht elementares Metall mit Clustern aus elementarem Metall und Metalloxid aufweist, wobei der Gehalt an elementarem Metall in der ersten Außenfläche und in der zweiten Außenfläche des PVD-Metalleffektpigmentes voneinander verschieden ist und sich um wenigstens 10 Atom-% unterscheidet.

Bevorzugte Weiterbildungen des erfindungsgemäßen PVD-Metalleffektpigtmentes sind in den Ansprüchen 2 bis 8 angegeben.

Das erfindungsgemäße PVD-Metalleffektpigment kann eine oder mehrere PVD-Schichten umfassen oder daraus bestehen.

Unter einem plättchenförmigen PVD-Metalleffektpigment wird vorzugsweise ein Metalleffektpigment verstanden, dessen Durchmesser wenigstens das Zehnfache der Dicke des PVD-Metalleffektpigmentes beträgt. Vorzugsweise beträgt der Durchmesser wenigstens das 20-fache, vorzugsweise wenigstens das 50-fache, noch weiter bevorzugt wenigstens das 80-fache, weiter bevorzugt wenigstens das 100-fache, der Dicke. Als sehr geeignet haben sich auch Durchmesser, die das 200-fache, 400-fache, 500-fache oder 1000-fache der Dicke betragen.

Mit Außenfläche der PVD-Metalleffektpigmente sind die obere bzw. untere Fläche des plättchenförmigen PVD-Metalleffektpigmentes bezeichnet, wobei das PVD-Metalleffektpigment eine, zwei, drei oder mehr PVD-Schichten enthalten kann. Die Außenflächen des PVD-Metalleffektpigmentes bezeichnen nicht etwaig auf das PVD-Metalleffektpigment aufgebrachte Korrosionsschutzschichten.

Die Angabe "Atom-%" bezieht sich auf sämtliche Bestandteile, d.h. elementares Metall, oxidiertes Metall und Sauerstoff, wobei oxidiertes Metall und der Sauerstoff als Metalloxid vorliegen, in einer (Zahl: 1) PVD-Schicht.

Die erfindungsgemäßen PVD-Metalleffektpigmente zeichnen sich im Unterschied zu durch Vermahlungsverformung erhaltenen Metalleffektpigmenten weiterhin durch eine äußerst plane Oberfläche, insbesondere ohne Vertiefungen und/oder Erhebungen, aus. Im Unterschied zu durch Verformungsvermahlung erhaltenen Metalleffektpigmenten ist der Randbereich nicht eingerissen oder ausgefranst, sondern weist üblicherweise gerade Bruchkanten auf.

Das erfindungsgemäße PVD-Metalleffektpigment zeichnet sich insbesondere dadurch aus, dass es einen asymmetrischen Aufbau aufweist. Die Asymmetrie besteht insbesondere in dem unterschiedlichen Gehalt an elementarem Metall über die Dicke der PVD-Schicht. Unter PVD-Schicht wird erfindungsgemäß eine (Zahl: 1) in einem (Zahl: 1) PVD-Abscheidevorgang mittels physikalischer Dampfabscheidung (PVD: physical vapour deposition) aufgebrachte Schicht verstanden. Die Asymmetrie der PVD-Schicht ist mithin auf die nichthomogene Zusammensetzung der PVD-Schicht zurückzuführen, die aus ungleichmäßiger Verteilung von elementarem Metall und Metalloxid über die Dicke der PVD-Schicht des erfindungsgemäßen PVD-Metalleffektpigmentes resultiert.

Der Gehalt an elementarem Metall zwischen der ersten und der zweiten Außenfläche des plättchenförmigen PVD-Metalleffektpigmentes unterscheidet sich um wenigstens 10 Atom-%, vorzugsweise um wenigstens 14 Atom-%, weiter bevorzugt um wenigstens 17 Atom-%. Gemäß einer bevorzugten Weiterbildung der Erfindung liegt der Unterschied in einem Bereich zwischen 21 und 96 Atom-%, weiter bevorzugt in einem Bereich zwischen 24 und 87 Atom-%, noch weiter bevorzugt in einem Bereich zwischen 27 und 76 Atom-%. Als sehr geeignet hat sich auch ein Unterschied aus einem Bereich von 31 bis 68 Atom-% oder aus einem Bereich zwischen 37 und 46 Atom-% erwiesen.

Neben elementarem Metall enthalten die erfindungsgemäßen PVD-Metalleffektpigmente Metalloxid. Der Gehalt an elementarem Metall ist dabei in seinem Verlauf über die Dicke einer (Zahl: 1) PVD-Schicht weitgehend invers, vorzugsweise invers, korreliert mit dem Gehalt an elementarem Metalloxid und umgekehrt.

Erfindungsgemäß ist in einer PVD-Schicht das Metall, aus dem das Metalloxid gebildet ist, gleich dem elementaren Metall in dieser PVD-Schicht. Anders ausgedrückt, das elementare Metall und das Metall des Metalloxids in einer PVD-Schicht sind voneinander nicht verschieden. Somit kann das elementare Metall verteilt in Metalloxid oder das Metalloxid verteilt in Metall vorliegen, was von den jeweiligen Anteilen an elementarem Metall bzw. Metalloxid abhängt.

Das elementare Metall und das Metall des Metalloxids in einer (Zahl: 1) PVD-Schicht sind deswegen gleich, weil die PVD-Schicht unter reaktiver Verdampfung eines Metalles in Gegenwart von Sauerstoff aufgebracht wird. Mithin erfolgt bei der Herstellung der erfindungsgemäßen PVD-Metalleffektpigmente keine Verdampfung von Metalloxid und Metall nebeneinander.

Erfindungsgemäß kann das Metall ein einzelnes Metall oder eine Metalllegierung bzw. das Oxid eines einzelnen Metalls oder das Oxid einer Metalllegierung sein.

Das in dem erfindungsgemäßen PVD-Metalleffektpigment als Metallcluster vorliegende elementare Metall bestimmt signifikant die Farbgebung des erfindungsgemäßen PVD-Metalleffektpigmentes. Der als Metalloxid vorliegende Anteil hat keinen bzw. nur einen sehr geringeren Anteil an der Farbgebung des erfindungsgemäßen PVD-Metalleffektpigmentes.

Es hat sich überraschend gezeigt, dass die erfindungsgemäßen PVD-Metalleffektpigmente überraschende optische Eigenschaften aufweisen. Der Teil des erfindungsgemäßen PVD-Metalleffektpigmentes mit der Fläche, die den höheren Gehalt an elementarem Metall aufweist, wirkt entweder im Wesentlichen als metallischer Reflektor oder im Wesentlichen als metallischer Absorber. Der Teil des erfindungsgemäßen PVD-Metalleffektpigmentes mit der Fläche, die den höheren Gehalt an elementarem Metall in Form von Metallcluster aufweist, wirkt im Wesentlichen farbgebend.

Des Weiteren hat sich überraschend herausgestellt, dass die erfindungsgemäßen asymmetrischen PVD-Metalleffektpigmente in der Anwendung einen homogenen und attraktiven optischen Eindruck erzeugen. In der Anwendung, beispielsweise in einer Beschichtung wie einer Farbe, Druckfarbe, einem Lack, Kosmetikum, etc., sind etwa 50 % der erfindungsgemäßen PVD-Metalleffektpigmente mit der Fläche, die den höheren Gehalt an elementarem Metall in Form von Metallcluster aufweist, sowie etwa 50 % der erfindungsgemäßen PVD-Metalleffektpigmente mit der Fläche, die den geringeren Gehalt an elementarem Metall in Form von Metallcluster aufweist, dem Auge des Betrachters zugewandt. Für den Betrachter ergibt sich überraschenderweise kein unregelmäßig erscheinender Farbeindruck, sondern vielmehr ein gleichmäßiger Farbeindruck. Dieser Effekt war insbesondere überraschend bei PVD-Metalleffektpigmenten, die von einer Seite mit einer geschlossenen Metallschicht versehen sind.

Weiterhin ist überraschend, dass die erfindungsgemäßen PVD-Metalleffektpigmente eine geringere Pigmentdicke aufweisen im Vergleich zu PVD-Metalleffektpigmenten, die eine weitgehend homogene Verteilung von Metalloxid und elementarem Metall in Form von Metallclustern in einer (Zahl: 1) PVD-Schicht aufweisen und zugleich einen dunklen Farbton erzeugen.

Es hat sich ferner überraschend herausgestellt, dass die erfindungsgemäßen PVD-Metalleffektpigmente die Bereitstellung eines grauen, vorzugsweise eines dunkelgrauen, PVD-Metalleffektpigmentes, das eines hohen Hell-Dunkel-Flop aufweist, ermöglichen. Es wird vermutet, dass dieser optische Effekt auf die Asymmetrie der erfindungsgemäßen PVD-Metalleffektpigmente zurückzuführen ist, die zu einer asymmetrischen Farbgebung führt, je nach dem, welche Fläche des PVD-Metalleffektpigmentes dem Betrachter zugewandt ist. Aufgrund der Mittelung des Farbeindruckes beim Betrachter kann ein bislang nicht zur Verfügung stehendes Metalleffektpigment im Graubereich mit starkem Hell-Dunkel-Flop erhalten werden.

Gemäß einer erfindungsgemäßen Weiterbildung weist das plättchenförmige PVD-Metalleffektpigment zwei aufeinander angeordnete PVD-Schichten auf, die jeweils elementares Metall mit Clustern aus elementarem Metall und Metalloxid aufweisen, wobei der Gehalt an elementarem Metall in der ersten Außenfläche und in der zweiten Außenfläche des PVD-Metalleffektpigmentes voneinander verschieden ist und sich um wenigstens 10 Atom-% unterscheidet.

Bei dieser Variante der Erfindung sind zwei PVD-Schichten unmittelbar übereinander aufgedampft. Dabei kann das Metall des elementaren Metalls bzw. des Metalloxids in beiden Schichten gleich oder voneinander verschieden sein.

Beispielsweise kann das Metall der ersten PVD-Schicht Aluminium bzw. Aluminiumoxid sein und das Metall der zweiten PVD-Schicht Chrom bzw. Chromoxid oder Titan bzw. Titanoxid sein.

Erfindungsgemäß ist es aber auch möglich, dass das Metall der ersten PVD-Schicht Aluminium bzw. Aluminiumoxid ist und das Metall der zweiten PVD-Schicht ebenfalls Aluminium bzw. Aluminiumoxid, wobei die jeweiligen Anteile der ersten und zweiten PVD-Schicht an Aluminiumoxid bzw. elementarem Aluminium vorzugsweise voneinander verschieden sind.

Erfindungsgemäß ist es auch möglich, dass das Metall der ersten PVD-Schicht Chrom bzw. Chromoxid ist und das Metall der zweiten PVD-Schicht ebenfalls Chrom bzw. Chromoxid, wobei die jeweiligen Anteile der ersten und zweiten PVD-Schicht an Chromoxid bzw. elementarem Chrom vorzugsweise voneinander verschieden sind.

Erfindungsgemäß ist es auch möglich, dass das Metall der ersten PVD-Schicht Titan bzw. Titanoxid ist und das Metall der zweiten PVD-Schicht ebenfalls Titan bzw. Titanoxid, wobei die jeweiligen Anteile der ersten und zweiten PVD-Schicht an Titanoxid bzw. elementarem Titan vorzugsweise voneinander verschieden sind.

Die vorstehenden Kombinationen von Metall bzw. Metalloxid bei einem PVD-Metalleffektpigment mit zwei PVD-Schichten sind erfindungsgemäß besonders bevorzugt.

Der Gehalt an elementarem Metall in der ersten Außenfläche des PVD-Metalleffektpigmentes unterscheidet sich wenigstens um 10 Atom-% von dem Gehalt an elementarem Metall in der zweiten Außenfläche, unabhängig davon ob die Metalle in der ersten PVD-Schicht und in der zweiten PVD-Schicht gleich oder voneinander verschieden sind.

Gemäß einer weiteren Variante der Erfindung weist das plättchenförmige PVD-Metalleffektpigment drei oder mehr aufeinander angeordnete PVD-Schichten auf, wobei sämtliche PVD-Schichten jeweils elementares Metall mit Clustern aus elementarem Metall und Metalloxid aufweisen und der höchste Gehalt an elementarem Metall entweder in der ersten oder in der zweiten Außenfläche des PVD-Metalleffektpigmentes vorliegt und wobei der Gehalt an elementarem Metall in der ersten Außenfläche und in der zweiten Außenfläche des PVD-Metalleffektpigmentes voneinander verschieden ist und sich um wenigstens 10 Atom-% unterscheidet.

Bei einem drei- oder mehrschichtigen Aufbau weist bevorzugt eine Außenfläche des erfindungsgemäßen PVD-Metalleffektpigmentes den höchsten Gehalt an elementarem Metall auf.

Wesentlich ist, dass die eine Außenfläche einen Gehalt an elementarem Metall aufweist, der wenigstens 10 Atom-% höher ist als der Gehalt an elementarem Metall in der zweiten Außenfläche.

Die dritte, vierte, fünfte, etc. PVD-Schicht zwischen den beiden äußeren PVD-Schichten, die die Außenflächen enthalten, können durchaus einen Gehalt an elementarem Metall aufweisen, der geringer oder höher als der Gehalt an elementarem Metall in der Außenfläche ist, deren Gehalt wenigstens 10 Atom-% unter dem Gehalt an elementarem Metall in der anderen Außenfläche mit dem höchsten Gehalt an elementarem Metall liegt.

Somit kann der Gehalt an elementarem Metall in den PVD-Zwischenschichten zwischen den PVD-Schichten, die die Außenflächen enthalten, in der Höhe schwanken, wobei es bevorzugt ist, dass der höchste Gehalt an elementarem Metall in einer der beiden Außenflächen vorhanden ist.

Erfindungsgemäß ist es bevorzugt, dass sich in der wenigstens einen PVD-Schicht der Gehalt an elementarem Metall kontinuierlich, vorzugsweise wenigstens teilweise mit einem Gradienten von 0,1 bis 4 Atom-%/nm Dicke PVD-Schicht, über die Dicke der PVD-Schicht ändert.

Unter einer kontinuierlichen Zunahme des Gehaltes an elementarem Metall wird verstanden, dass sich der Gehalt an elementarem Metall nicht sprunghaft ändert, sondern sich über die Dicke der PVD-Schicht kurvenartig oder weitergehend linear verändert. Gemäß einer bevorzugten Variante ist die Änderung in dem Gehalt an elementarem Metall in etwa linear, wobei der Gradient der Änderung, d.h. Zunahme oder Abnahme der Gehaltes an elementarem Metall, in einem Bereich von 0,1 bis 4 Atom-%/nm Dicke, weiter bevorzugt in einem Bereich von 0,2 bis 2 Atom-%/nm Dicke, noch weiter bevorzugt in einem Bereich von 0,4 bis 1,5 Atom-%/nm Dicke, liegt.

Der Gehalt an elementarem Metall, oxidiertem Metall und Sauerstoff kann mittels ESCA (Elektronenspektroskopie zur chemischen Analyse) bestimmt werden. Der mittels ESCA bestimmte Gehalt an elementarem Metall, oxidiertem Metall sowie Sauerstoff ist in der Regel eine Mittelung über etwa 20 nm Dicke der PVD-Schicht. Die gemessenen Werte in Atom-% weisen eine Genauigkeit **±** 1 Atom-% auf.

Die Dicke des PVD-Metalleffektpigmentes kann im REM (Rasterelektronenmikroskopie) bestimmt werden.

Gemäß einer weiteren Variante der Erfindung ändert sich zwischen zwei aufeinander folgenden PVD-Schichten der Gehalt an elementarem Metall diskontinuierlich.

Bei Anordnung von zwei oder mehr aufeinander folgenden PVD-Schichten ändert sich oft der Gehalt an elementarem Metall sprunghaft. Somit kann der Gehalt zwischen zwei aufeinander angeordneten PVD-Schichten, unabhängig davon, ob die elementaren Metalle gleich oder voneinander verschieden sind, sich um mehrere Atom-%, beispielsweise mehr als 5 Atom-% oder mehr als 10 Atom-% oder mehr als 15 Atom-% über eine Dicke von 1 bis 10 nm ändern, wobei der Gradient der Änderung des Gehaltes an elementarem Metall sich signifikant ändert.

Gemäß einer weiteren Variante der Erfindung liegt der Gehalt an elementarem Metall in der ersten Außenfläche des Metallpigmentes in einem Bereich von 0 bis 60 Atom-% und der Gehalt an elementarem Metall in der zweiten Außenfläche des Metallpigmentes vorzugsweise in einem Bereich von 30 bis 95 Atom-%, mit der Maßgabe, dass der Unterschied in dem Gehalt an elementarem Metall zwischen der ersten und der zweiten Außenfläche des PVD-Metalleffektpigmentes wenigstens 10 Atom-% beträgt.

Wenn der Gehalt an elementarem Metall in der einen Außenfläche beispielsweise bei 50 Atom-% liegt, dann liegt der Gehalt an elementarem Metall in der zweiten Außenfläche bei weniger als 40 Atom-% oder bei wenigstens 60 Atom-%. Liegt beispielsweise der Gehalt an elementarem Metall in der einen Außenfläche hingegen beispielsweise bei 20 Atom-%, dann liegt der Gehalt an elementarem Metall in der zweiten Außenfläche bei wenigstens 30 Atom-%.

Vorzugsweise liegt der Gehalt an elementarem Metall in der Außenfläche mit dem höheren Gehalt an elementarem Metall bei wenigstens 40 Atom-%, vorzugsweise bei wenigstens 45 Atom-%, weiter bevorzugt bei wenigstens 50 Atom-%, noch weiter bevorzugt bei wenigstens 55 Atom-% oder bei wenigstens 60 Atom-%. Als sehr geeignet haben sich auch Gehalte an elementarem Metall im Bereich von 65 bis 95 Atom-% oder von 70 bis 90 Atom-% erwiesen.

Erfindungsgemäß ist es bevorzugt, dass die Metalle der wenigstens zwei aufeinander angeordneten PVD-Schichten gleich oder voneinander verschieden sind und vorzugsweise aus der Gruppe, die aus Aluminium, Magnesium, Chrom, Silber, Kupfer, Gold, Zink, Zinn, Mangan, Eisen, Kobalt, Nickel, Titan, Tantal, Molybdän, deren Mischungen und deren Legierungen besteht, ausgewählt sind.

Als sehr bevorzugte Metalle haben sich Aluminium, Chrom, Titan sowie Legierungen davon erwiesen.

Weiterhin ist bevorzugt, dass die Dicke der PVD-Schicht(en) in einem Bereich von 10 bis 500 nm, vorzugsweise in einem Bereich von 20 nm bis 280 nm liegt/liegen. Die Dicke der PVD-Schicht(en) kann auch in einem Bereich von 30 bis 170 nm, weiter bevorzugt in einem Bereich von 50 bis 110 nm, noch weiter bevorzugt von 60 bis 90 nm, liegen.

Bei einer bevorzugten Variante weist bei einem PVD-Metalleffektpigment mit zwei, drei oder mehreren PVD-Schichten die PVD-Schicht mit dem höchsten Gehalt an elementarem Metall eine Schichtdicke im Bereich von 10 bis 40 nm, weiter bevorzugt im Bereich von 15 bis 35 nm, noch weiter bevorzugt im Bereich von 20 bis 30 nm, auf. Insbesondere, wenn die Schichtdicke im Bereich von 10 bis 40 nm, vorzugsweise im Bereich von 15 bis 30 nm, liegt, absorbiert diese PVD-Schicht einfallendes Licht, weshalb die erfindungsgemäßen PVD-Metalleffektpigmente stark dunkel erscheinen. Bei diesen Schichtdicken weist die PVD-Schicht stark absorbierende Eigenschaften auf.

Liegt die Schichtdicke der PVD-Schicht mit dem höchsten Gehalt an elementarem Metall oberhalb von 40 nm, beispielsweise in einem Bereich von 50 bis 500 nm, in einem Bereich von 80 bis 280 nm oder in einem Bereich von 100 bis 170 nm, dann wirkt diese PVD-Schicht stärker reflektierend.

Erfindungsgemäß ist bevorzugt, dass das elementare Metall wenigstens teilweise in Form von Clustern vorliegt, wobei die Cluster vorzugsweise eine durchschnittliche Teilchengröße aus einem Bereich von 1 nm bis 10 nm aufweisen. Weiterhin ist bevorzugt, dass die Cluster aus elementarem Metall eine Teilchengröße im Bereich von 1,5 bis 8 nm, vorzugsweise im Bereich von 2 bis 6 nm, aufweisen.

Die Cluster aus elementarem Metall sind dabei in eine kontinuierliche Schicht aus Metalloxid eingebettet, wobei das Metall des elementarem Metalls und des Metalloxids gleich sind. Somit liegen vorzugsweise die Cluster aus elementarem Metall in der Außenfläche der PVD-Schicht vor, die einen geringeren Gehalt an elementarem Metall aufweist.

Im Falle eines erfindungsgemäßen PVD-Metalleffektpigmentes mit nur einer PVD-Schicht liegen das elementare Metall auf einer Außenfläche vorzugsweise in Clusterform und eingebettet in Metalloxid vor. Auf der zweiten Außenfläche mit dem höheren Gehalt an elementarem Metall kann das elementare Metall auch in Clusterform vorliegen.

Erfindungsgemäß kann das plättchenförmige PVD-Metalleffektpigment mit einer Korrosionsschutzschicht, die optional oberflächenmodifiziert ist, umhüllt sein.

Die Korrosionsschutzschicht muss nicht notwendigerweise umhüllend aufgebracht sein. Insbesondere wenn die Korrosionsschutzschicht ebenfalls durch PVD aufgebracht ist, liegt keine umhüllende Korrosionsschutzschicht vor, da die Kanten nicht abgedeckt sind. Um auch die Kanten der erfindungsgemäßen PVD-Metalleffektpigmente gegenüber korrodierenden Einflüssen zu schützen, ist die Korrosionsschutzschicht bevorzugt umhüllend aufgebracht. Eine umhüllende Korrosionsschutzschicht kann beispielsweise durch nasschemische Beschichtung oder durch Beschichtung in einer Wirbelschicht aufgebracht werden.

Die PVD-Metalleffektpigmentoberflächen können ferner mit organisch modifizierten Phosphorsäuren und/oder Phosphonsäuren und/oder deren Derivaten versehen sein. Weiterhin können die Pigmentoberflächen mit Vanadium- und/oder Molybdänverbindungen sowie eine Kombination davon versehen sein. Auch können die erfindungsgemäßen Pigmente mit organischen Polymeren und/oder Metalloxiden beschichtet sein. Die Metalloxide umfassen bevorzugt SiO₂, Boroxide, Aluminiumoxide, Molybdate, Vanadate und schließen deren Hydroxide und Oxidhydrate oder Mischungen derselben ein.

Bei einer besonders bevorzugten Ausführungsform umfasst die, vorzugsweise umhüllende, Korrosionsschutzschicht SiO₂ oder besteht aus SiO₂. Besonders bevorzugt wird die SiO₂-Schicht mit Sol-Gel-Methoden auf das Effektpigment umhüllend aufgebracht. Hierbei werden vorzugsweise Tetraalkoxysilane, beispielsweise Tetramethoxysilan oder Tetraethoxysilan, verwendet.

Bei weiteren bevorzugten Ausführungsformen können die mit einer Korrosionsschutzschicht versehenen erfindungsgemäßen PVD-Metalleffektpigmente auch zusätzlich organisch-chemische Oberflächenmodifikationen, wie beispielsweise mit Silanen, Titanaten oder Aluminaten aufweisen. Die organisch-chemischen Oberflächenmodifikationen können eine Kompatibilisierung mit dem umgebenden Applikationsmedium, beispielsweise das Bindemittelsystem eines Lackes oder einer Farbe, bewirken. Beispielsweise kann eine solche organisch-chemische Nachbeschichtung eine chemische Anbindung an Bindemittel von Lacken oder Farben ermöglichen, wodurch eine kovalente Anbindung der erfindungsgemäßen PVD-Metalleffektpigmente ermöglicht wird. Eine kovalente Anbindung der PVD.

Metalleffektpigmente an das Bindemittelsystem erhöht die Schwitzwasserbeständigkeit und mechanische Beständigkeit des Beschichtungsmediums, beispielsweise von Farben und Lacken, nach Aushärtung.

Die organisch-chemische Oberflächenmodifizierung kann dabei mittels ein oder mehrerer organofunktioneller Silane, Aluminate, Zirkonate und/oder Titanate, wie in der DE 10 2006 009 130 A1 offenbart, oder aus wenigstens einer organischen phosphorhaltigen Verbindung, wie in der DE 10 2005 037 612 A1 offenbart, erfolgen. Die Inhalte der DE 10 2006 009 130 A1 und der DE 10 2005 037 612 A1 sind hiermit unter Bezugnahme aufgenommen.

Äußerst vorteilhaft stabilisieren metalloxidische Beschichtungen, vorzugsweise mit oder aus Siliziumoxid, die duktilen PVD-Metalleffektpigmente auch gegenüber mechanischen Einflüssen. So wird die mechanische Stabilität der PVD-Metalleffektpigmente soweit erhöht, dass die erfindungsgemäßen PVD-Metalleffektpigmente auch unter stärkerer mechanischer Beanspruchung, beispielsweise mittels Extrusion, in ein Applikationsmedium, beispielsweise Polymere, Bindemittel, etc., eingearbeitet werden können.

Mithin können die erfindungsgemäßen PVD-Metalleffektpigmente auch mittels Extrusion in Bindemittel zur Herstellung eines Pulverlackes eingearbeitet werden, wobei die PVD-Metalleffektpigmente in weitaus geringerem Maße beschädigt bzw. zerstört werden, als dies bei unbeschichteten oder bei mit rein organischen Schutzschichten beschichteten PVD-Metalleffektpigmenten der Fall ist.

Die Schichtdicken der Metalloxidschichten, insbesondere der schützenden Siliziumoxid-, Aluminiumoxid- und/oder anorganisch/organischen Mischschichten, liegen im Bereich von vorzugsweise 5 bis 60 nm und bevorzugt von 10 bis 50 nm.

Die Metalloxidoberfläche, vorzugsweise Siliziumoxidoberfläche, ist gemäß einer bevorzugten Variante, insbesondere bei Verwendung der erfindungsgemäßen PVD-Metalleffektpigmente in einem Pulverlack, organisch-chemisch modifiziert. Vorzugsweise ist die Metalloxidoberfläche dabei mit wenigstens einem organischen Silan modifiziert, das vorzugsweise nach der Aufbringung auf die Metalloxidoberfläche noch wenigstens eine reaktive organische Gruppe aufweist und eine chemische Anbindung an das Applikationsmedium, insbesondere das Bindemittel, ermöglicht.

Die erfindungsgemäßen PVD-Metalleffektpigmente finden bevorzugt in Pulverlacken mit einem PVD-Metalleffektpigmentgehalt von 0,1 bis 20 Gew. -%, vorzugsweise von 0,2 bis 10 Gew. -%, besonders bevorzugt von 0,5 bis 6 Gew. -%, bezogen auf das Pulverlackgesamtgewicht, Verwendung.

Die erfindungsgemäßen plättchenförmigen PVD-Metalleffektpigmente werden vorzugsweise in einer nichtstaubenden oder staubarmen Darreichungsform, beispielsweise als Granulate, Pellets, Briketts, Chips, Würstchen oder Tabletten bereitgestellt.

Bei der jeweiligen Darreichungsform hat der Restfeuchtegehalt einen Wert aus einem Bereich von vorzugsweise 0 bis 15 Gew.-%, weiter vorzugsweise aus einem Bereich von 0,05 bis 10 Gew.-%, noch weiter bevorzugt aus einem Bereich von 1 bis 5 Gew.-%, an Wasser und/oder organischem Lösemittel bzw. Lösemittelgemisch, jeweils bezogen auf das Gesamtgewicht der PVD-Metalleffektpigmentpräparation.

Insbesondere bei Granulaten, die keine kompakte, regelmäßige Form aufweisen, kann der Restfeuchtegehalt im höheren Bereich liegen, beispielsweise in einem Bereich von 5 bis 15 Gew.-% und bevorzugt in einem Bereich von 6 bis 10 Gew.-%, jeweils bezogen auf das Gesamtgewichts des Granulats.

Bei den regelmäßig geformten Angebotsformen Pellets, Briketts, Chips, Würstchen oder Tabletten sind niedrigere Restfeuchtegehalte aus einem Bereich von 0 bis 10 Gew.-% bevorzugt, weiter bevorzugt aus einem Bereich von 0,05 bis 3 Gew.-% und besonders bevorzugt aus einem Bereich von 0,1 bis 1 Gew.-%, jeweils bezogen auf das Gesamtgewicht der PVD-Metalleffektpigmentpräparation.

Insbesondere bei wässrigen Anwendungen ist bevorzugt, dass der Gehalt an organischen Lösemitteln in der erfindungsgemäßen PVD-Metalleffektpigmentpräparation unter 2 Gew.-%, bevorzugt unter 1 Gew.-% und besonders bevorzugt unter 0,5 Gew.-% liegt, um die VOC- und/oder Geruchsbelastung so gering wie möglich zu halten.

Gemäß einer weiteren bevorzugten Darreichungsform liegen die erfindungsgemäßen PVD-Metalleffektpigmente als Dispersion in Lösungsmittel oder als Paste vor.

Die der Erfindung zugrundeliegende Aufgabe wird auch durch die Verwendung der plättchenförmigen PVD-Metalleffektpigmente nach einem Ansprüche 1 bis 11 in Coatings, Lacken, Automobillacken, Pulverlacken, Druckfarben, leitfähigen Lackformulierungen, Digitaldruckfarben, Kunststoffen oder kosmetischen Formulierungen gelöst.

Die Aufgabe der Erfindung wird auch durch Bereitstellung eines Beschichtungsmittels, das plättchenförmige PVD-Metalleffektpigmente nach einem der Ansprüche 1 bis 8 enthält, gelöst.

Vorzugsweise wird das Beschichtungsmittel aus der Gruppe, die aus Coatings, Lacken, Automobillacken, Pulverlacken, Druckfarben, Digitaldruckfarben, Kunststoffen und kosmetischen Formulierungen besteht, ausgewählt ist.

Die Aufgabe der Erfindung wird auch durch Bereitstellung eines Gegenstand, der mit plättchenförmigen PVD-Metalleffektpigmenten nach einem der Ansprüche 1 bis 8 oder mit einem Beschichtungsmittel nach Anspruch 10 versehen ist, gelöst.

Bei dem Gegenstand kann es sich um beschichtete Folien, insbesondere Gewächshausfolien, Papier, Karton, Textilien, Möbel, Fassadenelemente, Kunststoffelemente, Automobilkarosserien, etc. handeln.

Die der Erfindung zugrundeliegende Aufgabe wird ferner durch Bereitstellung eines Verfahrens zur Herstellung eines plättchenförmigen PVD-Metalleffektpigmentes gelöst, wobei das Verfahren folgende Schritte umfasst:
(a) Bedampfen eines linear bewegten Substrates in einer einen Bedampfungsabschnitt aufweisenden Vakuumkammer mittels reaktiver physikalischer Dampfabscheidung (PVD) mit wenigstens einem Metall in Gegenwart von Sauerstoff, so dass sich ein Teil des Metalls mit Sauerstoff unter Bildung von Metalloxid umsetzt und nicht umgesetztes Metall und gebildetes Metalloxid über den Bedampfungsabschnitt asymmetrisch verteilt in Bezug auf die Bewegungsrichtung des linear bewegten Substrats abgeschieden werden unter Erhalt einer PVD-Schicht oder mehrerer aufeinander angeordneter PVD-Schichten,
(b) Ablösen der aufgedampften PVD-Schicht(en),
(c) Zerkleinern der abgelösten PVD-Schicht(en),
(d) optional Überführen der zerkleinerten PVD-Schicht(en) in eine Dispersion oder Paste.

Gemäß einer bevorzugten Ausführungsform der Erfindung erfolgt in Schritt (a) das Bedampfen eines linear bewegten Substrates in einer Vakuumkammer mittels physikalischer Dampfabscheidung (PVD) mit wenigstens einem Metall in Gegenwart von Sauerstoff, wobei in Bezug auf die Bewegungsrichtung des Substrates und in Bezug auf die Metalldampfquelle(n) der Sauerstoff räumlich und/oder mengenmäßig asymmetrisch verteilt in die Vakuumkammer eingebracht wird, unter Erhalt einer PVD-Schicht oder mehrerer aufeinander angeordneter PVD-Schichten,

Gemäß einer weiteren Variante der Erfindung wird im Schritt (a) der Sauerstoff über eine Zugabevorrichtung weitgehend zentral in den aus wenigstens einer Metalldampfquelle abgegebenen Metalldampf eingeleitet, wobei zwischen dem linear beweglichen Substrat einerseits und der Metalldampfquelle sowie der Zugabevorrichtung für Sauerstoff andererseits eine oder mehrere den Bedampfungsabschnitt begrenzende und eine Blendenöffnung bildende Blende(n) vorgesehen sind, wobei die Blendenöffnung in Bezug auf die Metalldampfquelle(n) sowie die Zugabevorrichtung(en) für Sauerstoff asymmetrisch angeordnet ist.

Gemäß einer weiteren Variante der vorliegenden Erfindung wird die Aufgabe auch durch ein Verfahren zur Vorabüberprüfung einer in einer PVD-Schicht einzustellenden Asymmetrie bezüglich des unterschiedlichen Gehaltes an elementarem Metall in der ersten und der zweiten Außenfläche gelöst, das folgenden Schritt umfasst:
Bedampfen eines umlaufenden oder sich bewegenden linear bewegten Substrates oder Bandes in einem einstufigen Verfahren in einer Vakuumkammer in einem Bedampfungsbereich, der eine Breite b_{B} und einer Länge l_{B} aufweist, in Gegenwart von zumindest einer Sauerstoff-abgebenden Quelle mit wenigstens einem Metall M_{A} aus wenigstens einer Verdampferquelle VQ_{A,} welche eine Massenbelegung m_{MA1} (Masse 1 von Metall A) und m_{O1} (Masse von Sauerstoff zu Metall A1) mit einer resultierenden Transmission T1 in einem ersten Teilsektor des Substrates oder
Bandes mit der Länge Δl_{B1} und sodann eine Massenbelegung m_{MA2} (Masse 2 von Metall A) und m_{O2} (Masse von Sauerstoff zu Metall A2) mit einer resultierenden Transmission T2 in einem zweiten Teilsektor des Substrates oder des Bandes mit der Länge Δl_{B2} auf dem Band erzeugt, wobei der erste Teilsektor und der zweite Teilsektor nicht überlappen und wobei T1 und T2 unabhängig voneinander Werte zwischen 0 und 95 % sowie eine Differenz ΔT von 5 bis 90 % aufweisen und wobei die Massenbelegung an Metall M und an Sauerstoff über die Breite des umlaufenden oder sich bewegenden Substrates oder Bandes weitgehend konstant ist.

Die Transmission kann auf herkömmliche Art und Weise gemessen werden.

Durch dieses Verfahren werden auf dem Substrat oder Band nebeneinander oder separat voneinander liegende PVD-Schichten erzeugt, die der ersten, beispielsweise unteren, bzw. der zweiten, beispielsweise oberen, Außenfläche eines herzustellenden PVD-Metalleffektpigmentes entsprechen. An diesen voneinander räumlich separierten unteren bzw. oberen Flächen können sodann Transmissionsmessungen durchgeführt werden. Die so erhaltenen Ergebnisse erlauben eine Vorabüberprüfung der in dem herzustellenden PVD-Metalleffektpigment bzw. in der PVD-Schicht einzustellenden Asymmetrie zwischen unterer oder erster und oberer oder zweite Außenfläche anhand der sich unterscheidenden Transmission.

Die vorstehenden Ausführungen zu den erfindungsgemäßen Metalleffektpigmenten gelten entsprechend für das erfindungsgemäße Verfahren.

Bei dem erfindungsgemäßen Verfahren erfolgt eine Umsetzung eines Teils an verdampftem Metall mit eingespeistem Sauerstoff unter Bildung von Metalloxid. Bei dem erfindungsgemäßen Verfahren ist wesentlich, dass nicht umgesetztes elementares Metall und aus Sauerstoff und Metall gebildetes Metalloxid asymmetrisch auf dem linear bewegten Substrat abgeschieden werden, wodurch eine asymmetrisch aufgebaute PVD-Schicht erhalten wird.

Eine asymmetrische Abscheidung von elementarem Metall und Metalloxid kann gemäß einer ersten Variante dadurch erreicht werden, indem Metalldampf und Sauerstoff räumlich und/oder mengenmäßig asymmetrisch in die PVD-Vorrichtung eingebracht werden.

Bei einer räumlich und/oder symmetrischen Einbringung von Metalldampf und Sauerstoff in die PVD-Vorrichtung kann eine asymmetrische Abscheidung auf dem linear bewegten Substrat gemäß einer zweiten Variante dadurch erreicht werden, indem zwischen dem linear bewegten Substrat und der Metalldampfquelle sowie der Zugabevorrichtung für Sauerstoff Blenden angeordnet werden, wobei die Blenden asymmetrisch in Bezug auf die Metalldampfquelle(n) sowie der Zugabevorrichtung(en) für Sauerstoff angeordnet sind.

Bei dem linear bewegten Substrat handelt es sich vorzugsweise um Band, das auch als umlaufendes Band ausgebildet sein kann. Bei dem Band kann es sich um ein Metallband oder um eine Folie aus Kunststoff handeln. Im Falle eines Metallbandes hat sich ein Edelstahlband, vorzugsweise ein poliertes Edelstahlband, als geeignet erwiesen. Im Falle eines Kunststoffbandes kann das Band beispielsweise aus Polyethylenterephthalat, anderen Polyester oder aus Polyacrylat hergestellt sein. Gemäß einer bevorzugten Ausführungsform ist das linear bewegte Substrat mit einer Trennschicht ("Release Coat") versehen, die das Abtrennen oder Ablösen der aufgedampften PVD-Schicht erleichtert bzw. erst ermöglicht.

Als Trennschicht kann ein in Lösemittel, wie z.B. Aceton, Ethylacetat, etc., löslicher Lack oder ein wasserlösliches Salz verwendet werden.

Das auf das linear bewegte Substrat aufgedampfte Metall, beispielsweise ein einzelnes Metall oder eine Metalllegierung, wird von einer Metallverdampferquelle, auch als Metallquelle bezeichnet, aufgedampft. Bei der Metallquelle kann es sich um beheizte Tiegel oder widerstandsbeheizte Verdampferschiffe handeln, die das zu verdampfende Metall enthalten. Das Verdampfen der Metalle kann auch mittels Elektronenstrahlverdampfer bewirkt werden.

Bezogen auf die Richtung der Linearbewegung des linear bewegten Substrates kann der Sauerstoff gemäß der ersten Variante des erfindungsgemäßen Verfahrens vor und/oder nach dem Metallverdampfer zugeführt werden.

Gemäß einer bevorzugten Ausführungsform der Erfindung wird bei der ersten Variante des erfindungsgemäßen Verfahrens der Sauerstoff, bezogen auf die Richtung der Linearbewegung nach dem Metallverdampfer angeordnet. Somit wird das linear bewegte Substrat zunächst durch den Metalldampfkegel und sodann durch den Sauerstoffkegel geführt. Bedingt durch die Überlagerung des Mefalldampfkegels und des Sauerstoffkegels wird auf das linear bewegte Substrat zunächst Metall und sodann zunehmend auch Metalloxid abgeschieden. Das Metalloxid wird durch Umsetzung von Metalldampf und Sauerstoff vor der Abscheidung auf dem Substrat gebildet. Bei dem erfindungsgemäßen Verfahren kommt es mithin zu einer reaktiven Verdampfung.

Durch die Überlagerung von Metalldampfkegel und Sauerstoffkegel nimmt bei dieser Variante des erfindungsgemäßen Verfahrens der Anteil an elementarem Metall in Richtung der Linearbewegung des linear bewegten Substrates ab, weshalb es zur zunehmenden Einlagerung von Clustern aus elementarem Metall in Metalloxid kommt. Zuletzt wird dann im wesentlichen Metalloxid und zu einem geringeren Anteil elementares Metall als Metallcluster abgeschieden. Die so erhaltene eine (Zahl: 1) PVD-Schicht ist mithin im Hinblick auf den Gehalt an Clustern aus elementarem Metall asymmetrisch.

Selbstverständlich kann auch in Bezug auf die Linearbewegung des linear bewegten Substrates bei der ersten Variante des erfindungsgemäßen Verfahrens zunächst die Sauerstoffquelle und sodann die Metalldampfquelle bzw. der Metallverdampfer angeordnet werden. Bei dieser Ausführungsform wird das linear bewegte Substrat zunächst durch den Sauerstoffkegel und sodann durch den Metalldampfkegel geführt. Bedingt durch die Überlagerung der beiden Kegel kommt es zunächst zu einer Abscheidung von Metalloxid, in das zunehmend elementares Metall in Form von Metallclustern eingelagert wird. Zuletzt wird dann im Wesentlichen Metall und zu einem geringeren Anteil Metalloxid abgeschieden. Die so erhaltene eine (Zahl: 1) PVD-Schicht ist ebenfalls im Hinblick auf den Gehalt an Clustern aus elementarem Metall asymmetrisch.

Die Erfinder haben herausgefunden, dass durch asymmetrische Anordnung von Metallverdampfer und Sauerstoffquelle in Bezug auf die Bewegungsrichtung des linear bewegten Substrates es auf überraschend einfache Art und Weise möglich ist, neuartige PVD-Metalleffektpigmente bereitzustellen, die die oben genannten Eigenschaften aufweisen.

Gemäß einer weiteren Ausgestaltung bei der ersten Variante des erfindungsgemäßen Verfahrens wird in Bezug auf die Linearbewegung des linear bewegten Substrates sowohl vor als auch nach dem Metallverdampfer jeweils eine Sauerstoffquelle angeordnet, wobei sich jedoch die Menge an zugeführtem Sauerstoff unterscheidet. Dabei kann die Menge an zugeführtem Sauerstoff vor oder nach der Metalldampfquelle größer oder kleiner sein.

Bei dieser Ausgestaltung der ersten Variante des erfindungsgemäßen Verfahrens liegt auf beiden Flächen der PVD-Schicht Metalloxid mit eingelagerten Clustern aus elementarem Metall vor, wobei der Gehalt an Clustern aus elementarem Metall in den beiden Außenflächen unterschiedlich ist.

Wenn durch die Sauerstoffquelle, die in Richtung der Linearbewegung vor der Metalldampfquelle liegt, eine geringere Sauerstoffmenge zugeführt wird, verglichen mit der Sauerstoffquelle, die nach der Metalldampfquelle liegt, dann wird zunächst ein größer Anteil an elementarem Metall und ein geringerer Anteil an Metalloxid abgeschieden und sodann zunehmend mehr elementares Metall. Daran anschließend steigt dann der Anteil an Metalloxid an und der Anteil an elementarem Metall, der in das Metalloxid eingelagert wird, nimmt ab. Auf diese Art und Weise kann eine (Zahl: 1) PVD-Schicht erzeugt werden, deren Kern, neben gegebenenfalls vorhandenem Metalloxid, überwiegend aus elementarem Metall besteht und dessen Außenflächen einen unterschiedlichen Gehalt an Metalloxid bzw. elementaren Metall aufweisen, weshalb die PVD-Schicht asymmetrisch ist. Selbstverständlich ist auch eine umgekehrte Anordnung möglich, bei der über die erste Sauerstoffquelle eine größere Sauerstoffmenge zugeführt wird als über die zweite Sauerstoffquelle, bezogen auf die Linearbewegung der linear bewegten Substrates.

Gemäß der zweiten Variante des erfindungsgemäßen Verfahrens erfolgt die Einbringung von Metalldampf sowie von Sauerstoff symmetrisch bzw. weitgehend symmetrisch zu dem linear bewegten Substrat. Durch Anordnung von Blenden, die einen Teil des weitgehend symmetrisch eingebrachten Metalldampfs sowie des Sauerstoffs von dem linear bewegten Substrats abschirmen, wird das Substrat asymmetrisch mit elementarem Metall und Metalloxid in Bewegungsrichtung des linear bewegten Substrates bedampft. Vorzugsweise sind die Blenden so angeordnet, dass nur etwa eine Hälfte des Verdampfkegels des Metalldampfes und des Sauerstoffkegels das linear bewegte Substrat erreicht und dort in Form von elementarem Metall und Metalloxid abgeschieden wird.

Bei der zweiten Variante des erfindungsgemäßen Verfahrens wird der Öffnungswinkel von Metalldampfkegel und Sauerstoffkegel vorzugsweise verschieden groß eingestellt. Gemäß einer bevorzugten Ausgestaltung dieser zweiten Variante des erfindungsgemäßen Verfahrens ist der Öffnungswinkel des Sauerstoffkegels geringer als der Öffnungswinkel des Metalldampfkegels.

Der Öffnungswinkel des Sauerstoffkegels kann beispielsweise über die Ausgestaltung der Geometrie der Öffnung der Sauerstoffzugabevorrichtung eingestellt werden. Ebenfalls kann der Öffnungswinkel des Metalldampfkegels über die Geometrie der Öffnung des Metallverdampfers eingestellt werden.

Bei identischer Geometrie der Öffnungen von Sauerstoffzugabevorrichtung und Metallverdampfer kann bei der zweiten Variante des erfindungsgemäßen Verfahrens eine Asymmetrie auch durch einen unterschiedlichen Abstand von Metallverdampfer und Sauerstoffzugabevorrichtung zum linear bewegten Substrat erreicht werden. Vorzugsweise ist der Metallverdampfer weiter entfernt vom Substrat angeordnet als die Sauerstoffzugabevorrichtung. Bei dieser Ausgestaltung der zweiten Variante des erfindungsgemäßen Verfahrens wird mithin der Sauerstoff weitgehend zentral, vorzugsweise zentral, in den bereits ausgebildeten Metalldampfkegel eingebracht.

Es hat sich überraschend herausgestellt, dass im Falle einer asymmetrischen Bedampfung mit Metall und Sauerstoff das linear bewegte Substrat eine Lineargeschwindigkeit von bis zu 1000 m/min haben kann. Gemäß einer bevorzugten Weiterbildung beträgt die Lineargeschwindigkeit wenigstens 10 m/min, vorzugsweise wenigstens 60 m/min, weiter bevorzugt wenigstens 120 m/min. Als sehr geeignet haben sich Lineargeschwindigkeiten aus einem Bereich von 200 m/min bis 950 m/min, weiter bevorzugt aus einem Bereich von 450 m/min bis 850 m/min, noch weiter bevorzugt aus einem Bereich von 620 m/min bis 780 m/min, erwiesen.

Das erfindungsgemäße Verfahren ist in prozesstechnischer Hinsicht einfach, da die Inhomogenität oder Asymmetrie des erhaltenen PVD-Metalleffektpigmentes erwünscht ist und mithin keine aufwendigen Vorkehrungen getroffen werden müssen, um eine homogene PVD-Schicht zu erhalten.

Als Sauerstoffquelle können Sauerstoff-abspaltende Verbindungen und/oder Wasser-abspaltende Verbindungen und/oder Wasser, verwendet werden. Unter "Sauerstoff" werden erfindungsgemäß auch Sauerstoffatome, sauerstoffatomhaltige Verbindungen, wie beispielsweise OH-Radikale oder Wasser, und natürlich molekularer Sauerstoff verstanden.

Gemäß einer bevorzugten Ausführungsform wird molekularer Sauerstoff (O₂) verwendet. Gemäß einer weiteren bevorzugten Ausführungsform wird Wasser und/oder Luft verwendet.

Wenn das erfindungsgemäße PVD-Metalleffektpigment mehr als eine (Zahl: 1) PVD-Schicht aufweisen soll, können beispielsweise mehrere PVD-Beschichtungsvorrichtungen nacheinander angeordnet werden und das linear bewegte Substrat entsprechend mit mehreren PVD-Schichten versehen werden, wobei jede PVD-Schicht, wie oben erläutert, asymmetrisch ausgebildet ist. Alternativ ist es auch möglich das linear bewegte Substrat zurückzuspulen und erneut in der derselben PVD-Beschichtungsvorrichtung zu beschichten, wobei jede PVD-Schicht, wie oben erläutert, asymmetrisch ausgebildet ist.

Die zweite, dritte, vierte, fünfte, etc PVD-Schicht können dabei unter Verwendung verschiedener Metalle bzw. Metalloxide aufgebracht werden. Selbstverständlich kann bei jeder PVD-Schicht auch jeweils das gleiche Metall verwendet werden, wobei lediglich der Anteil an Sauerstoff von PVD-Schicht zu PVD-Schicht geändert wird, so dass sich der Anteil von elementarem Metall und Metalloxid von PVD-Schicht zu PVD-Schicht zu ändert, wobei jede PVD-Schicht, wie oben erläutert, asymmetrisch ausgebildet ist.

Über die Breite des linear bewegten Substrates können mehrere Metalldampfquellen und/oder mehrere Sauerstoffquellen angeordnet sein, deren Längsachse, die durch die Mittelpunkte der jeweiligen Quellen gebildet ist, vorzugsweise quer zur Bewegungsrichtung angeordnet ist. Mithin sind die Metalldampfquellen sowie die Sauerstoffquellen miteinander fluchtend und im rechten Winkel zur Bewegungsrichtung des linear bewegten Substrates angeordnet, so dass über den Querschnitt des auf dem linear bewegten Substrates die jeweilige Konzentration an elementarem Metall bzw. Metalloxid konstant ist.

Gemäß einer bevorzugten Weiterbildung der Erfindung liegt die Breite des linear bewegten Substrates in einem Bereich von 0,1 bis 5 m, vorzugsweise in einem Bereich von 0,5 bis 4 m, weiter bevorzugt in einem Bereich von 1 m bis 3 m.

Gemäß der vorliegenden Erfindung weisen die Verdampferquellen eine Widerstandsheizung auf und/oder werden mittels Elektronenstrahlverdampfung betrieben.

In der Vakuumkammer liegt vorzugsweise ein Druck im Bereich von 10⁻⁴ bar bis 10⁻¹ bar vor.

Bei Verwendung von molekularem Sauerstoff als Sauerstoffquelle liegt die Flussrate bei einer Bandbeschichtungsbreite von einem halben Meter vorzugsweise in einem

Bereich von 1 bis 15 slm, weiter bevorzugt von 2 bis 10 slm (slm: Standardliter pro Minute).

Ein größerer Umsatz von Metall und Sauerstoff, d.h. Bildung von Metalloxid, wird durch dichteres Anordnen der Sauerstoffquelle an oder in den Metalldampfkegel erreicht.

Gemäß einer bevorzugten Weiterbildung des erfindungsgemäßen Verfahrens ist das in Schritt (a) verwendete linear bewegte Substrat mit einer, vorzugsweise mittels physikalischer Dampfabscheidung (PVD) aufgebrachten Metallschicht versehen oder eine Metallfolie.

Gemäß einer bevorzugten Ausführungsform wird ein vorbeschichtetes Substrat als linear bewegtes Substrat verwendet.

Gemäß einer erfindungsgemäßen Ausgestaltung wird als Substrat ein metallisiertes Substrat, das vorzugsweise zwischen Substratoberfläche und Metallschicht eine Trennschicht aufweist, verwendet. Beispielsweise kann es sich hierbei um ein Kunststoffband handeln, das eine Trennschicht und nachfolgend eine Aluminiumschicht, Chromschicht oder Titanschicht aufweist. Vorzugsweise ist diese Metallschicht auch mittels PVD aufgebracht. Diese Metallschicht weist naturgemäß bereits einen geringen Anteil an entsprechendem Metalloxid auf.

Alternativ kann auch eine Metallfolie als linear bewegliches Substrat verwendet werden. Beispielsweise kann als Metallfolie eine bereits kommerziell erhältliche mit Aluminium metallisierte Folie verwendet werden. Bei diesen mit Aluminium metallisierten Folie liegt die mittlere Dicke der Aluminiumschicht bevorzugt in einem Bereich von 10 bis 50 nm und besonders bevorzugt in einem Bereich von 20 bis 40 nm.

Auf dieses vorbeschichtete metallisierte, linear bewegliche Substrat oder auf die Metallfolie können dann eine asymmetrische PVD-Schicht oder zwei, drei, vier, fünf, etc. asymmetrische PVD-Schichten, wie oben beschrieben, aufgebracht werden, wobei ein asymmetrisches PVD-Metalleffektpigment erhalten wird.

Das Ablösen der PVD-Schicht(en) im Schritt (b) kann erfolgen, indem das beschichtete linear bewegliche Substrat durch ein Lösemittel oder Lösemittelgemisch geführt wird. Zusätzlich kann die Ablösung auch unter Einwirkung mechanischer Kräfte erfolgen, indem beispielsweise das Substrat über Umlenkrollen geführt wird, wodurch der Metallfilm bricht und sich ablöst.

Das Zerkleinern der abgelösten Bruchstücke des Metallfilms im Schritt (c) kann durch mechanisches Einwirken, beispielsweise durch Rühren und/oder durch Einstrahlung von Ultraschall erfolgen, bis die gewünschte PVD-Metalleffektpigmentgröße erreicht wird.

Optional kann dann im Schritt (d) das Lösemittel abgetrennt und/oder gewechselt werden unter Erhalt einer Dispersion oder Paste mit erfindungsgemäßem PVD-Metalleffektpigment.

Optional können die erhaltenen PVD-Metalleffektpigmente mit einer Korrosionsschutzschicht versehen werden. Vorzugsweise wird die Korrosionsschutzschicht nasschemisch oder in einer Wirbelschicht umhüllend auf die PVD-Metalleffektpigmente aufgebracht. Nachträglich kann auf die Korrosionsschutzschutzschicht eine organisch-chemische Oberflächenmodifizierung aufgebracht werden. Es wird in dieser Hinsicht auf die oben stehenden Ausführungen zu den PVD-Metalleffektpigmenten verwiesen.

In einem weiteren Schritt kann dann die Dispersion oder die Paste mit Metalleffektpigmenten, die optional eine Korrosionsschutzschicht aufweisen, durch Kompaktieren in eine kompaktierte Darreichungsform überführt werden. Beispielsweise können durch Granulieren, Pelletieren, Brikettieren, Tablettieren und/oder Extrudieren, die PVD-Metalleffektpigmente in Granulat, Pellets, Briketts, Tabletten oder Würstchen überführt werden.

### Beschreibung der Abbildungen

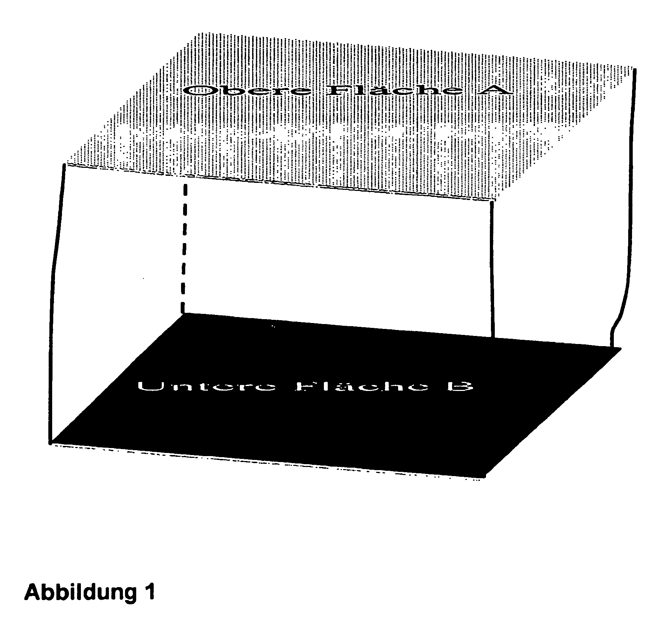

Abbildung 1 zeigt den schematischen Aufbau eines erfindungsgemäßen mehrschichtigen PVD-Metalleffektpigments mit einer (Zahl:1) PVD-Schicht, wobei der Gehalt an elementarem Metall in der oberen Fläche A größer ist, als der Gehalt an elementarem Metall in der unteren Fläche B.

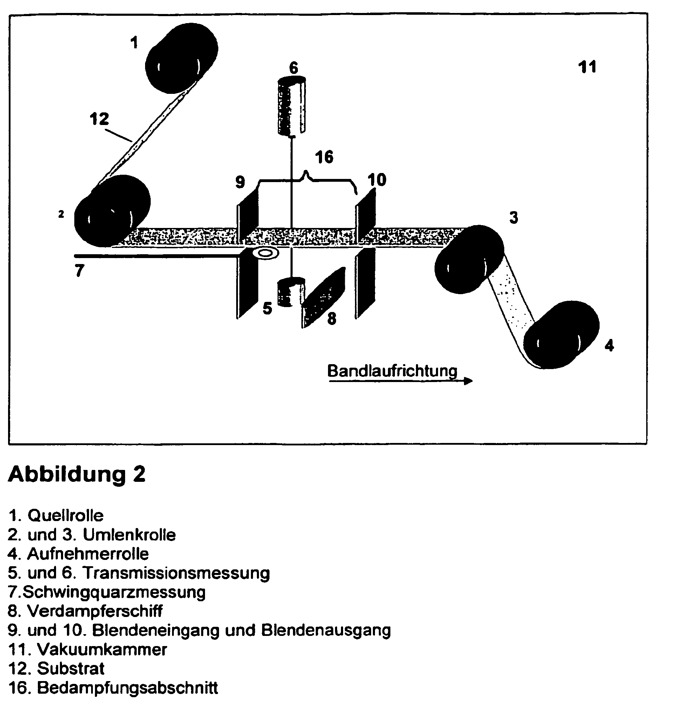

Abbildung 2 beschreibt den prinzipiellen Aufbau einer PVD-Vorrichtung in Form einer Bandbeschichtungsanlage mit einer Quellrolle 1, von der das linear bewegliche Substrat (12) abgerollt wird. Das Substrat wird dann über die Umlenkrollen (2) und (3) zur Aufnehmerrolle (4) geführt. Die Transmissionsmessung (5) und (6) bzw. die Schwingquarzmessung (7) erlauben eine Bestimmung der Menge von abgeschiedenem Metalloxid und elementarem Metall. Die Blenden (9) und (10) trennen die Bedampfungseinheit mit Verdampferschiff (8) (Metallverdampfer) von der Umgebung ab. Die Blenden (9) und (10) begrenzen den Bedampfungsabschnitt (16), in dem das linear bewegte Substrat mittels PVD bedampft wird. Die Anlage befindet sich in einer Vakuumkammer (11).

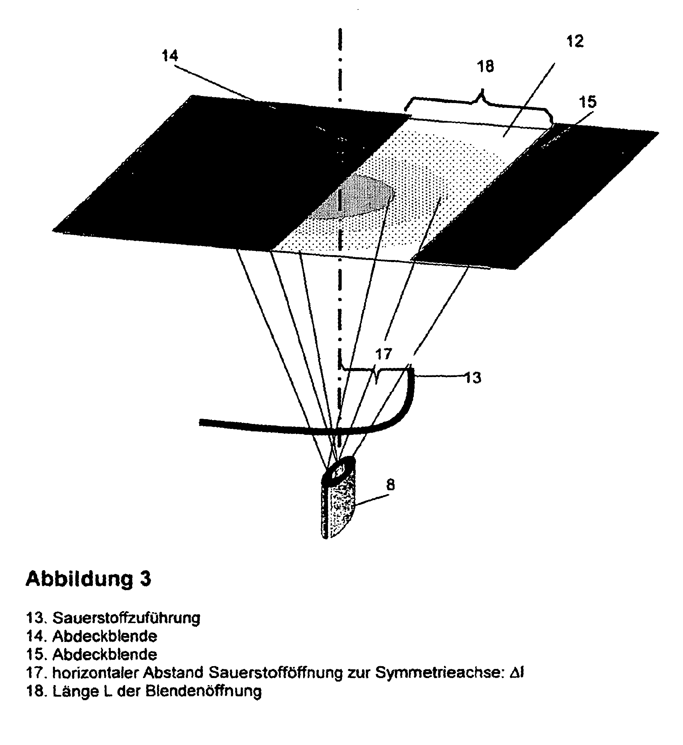

Abbildung 3 zeigt die geometrische Anordnung von Sauerstoffeinlass (13), Metallverdampfer (8) und Blenden (14) und (15) mit der Länge L der Blendenöffnung (18). Die durch die Blenden (14) und (15) begrenzte Blendenöffnung definiert den Bedampfungsabschnitt des Substrates. Die Blenden (14) und (15) sind zwischen Substrat und Metallverdampfer (8) und Sauerstoffeinlass (13) angeordnet. Die schematische Anordnung zeigt weiterhin die Länge L der Blendenöffnung (18) und den horizontalen Abstand Δl 17 zwischen dem Mittelpunkt des Verdampfers und dem Mittelpunkt des Sauerstoffeinlasses.

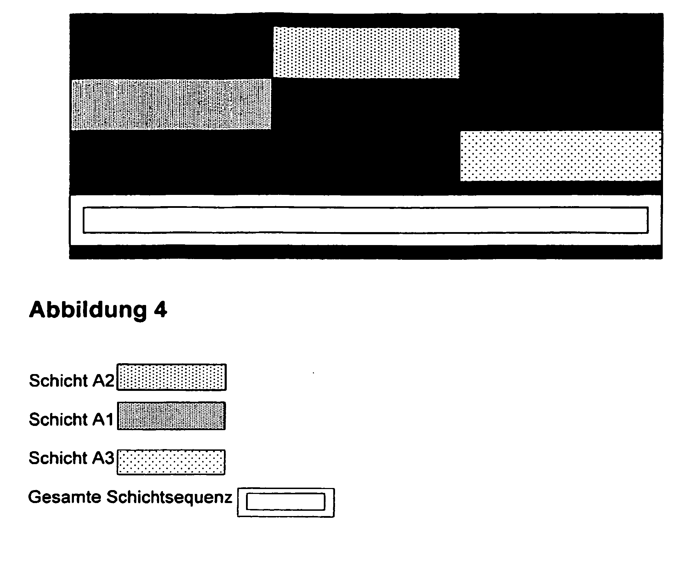

Abbildung 4 zeigt die Draufsicht von sequentiell angeordneten Längsblendenöffnungen, die bei der in Abbildung 3 gezeigten Anordnung zusätzlich angeordnet werden können und eine Unterteilung der PVD-Schicht in eine "untere" Schicht A1, "mittlere" Schicht A2 und eine "obere" Schicht A3 ermöglichen. Die untere, über die gesamte Breite geöffnete Blende ergibt dann in der Summe die "Gesamtschichtsequenz" der PVD-Schicht des erfindungsgemäßen PVD-Metalleffektpigmentes.

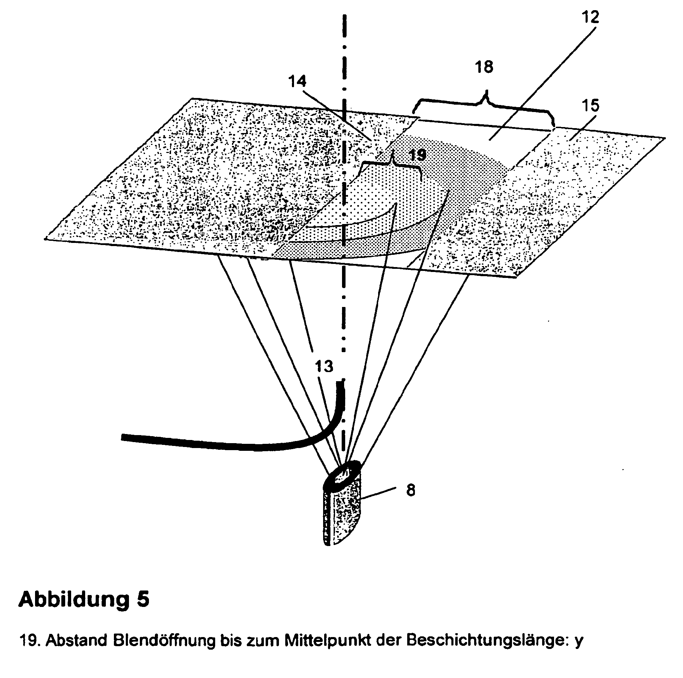

Abbildung 5 zeigt die geometrische Anordnung von Sauerstoffeinlass, Metallverdampfer (8), Sauerstoffzuführung (13) und asymmetrisch angeordneten Blenden (14) und (15). Die schematische Anordnung zeigt weiterhin die Länge L (18) der Blendenöffnung, die durch die Blenden (14) und (15) begrenzt ist. Die Blendenöffnung definiert den Bedampfungsabschnitt 18 des Substrates (12). Der horizontale Abstand "y" definiert den Mittelpunkt der Bedampfungslänge (18) zwischen dem Mittelpunkt des Metallverdampfers (8) und dem Beginn der Blendenöffnung (18). Bei dieser Anordnung liegt der Sauerstoffeinlass (13) direkt oberhalb des Mittelpunktes des Metallverdampfers 8. Δl (17) zwischen Mittelpunkt Verdampfer und Mittelpunkt Sauerstoffeinlass ist in diesem Fall also Null.

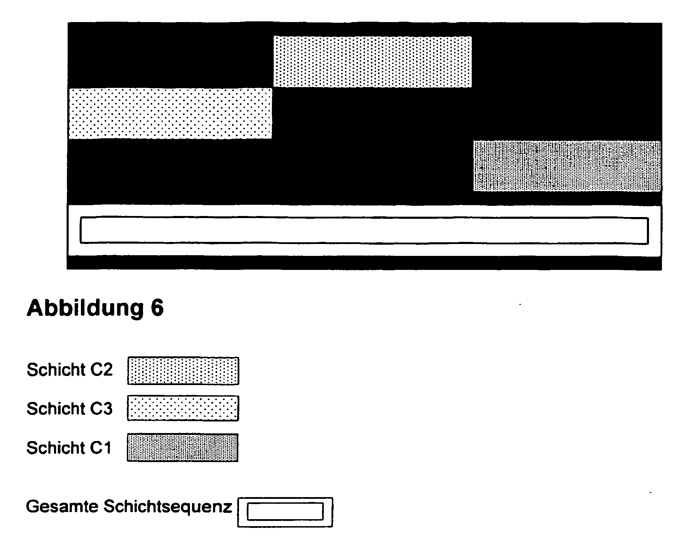

Abbildung 6 zeigt die Draufsicht von sequentiell angeordneten Längsblendenöffnungen, die bei der in Abb. 5 gezeigten Anordnung zusätzlich angeordnet werden können und eine Unterteilung der PVD-Schicht in eine "untere" Schicht C3, "mittlere" Schicht C2 und eine "obere" Schicht C1 ermöglichen. Die untere, über die gesamte Breite geöffnete Blende ergibt dann in der Summe die "Gesamtschichtsequenz" der PVD-Schicht des erfindungsgemäßen PVD-Metalleffektpigmentes.

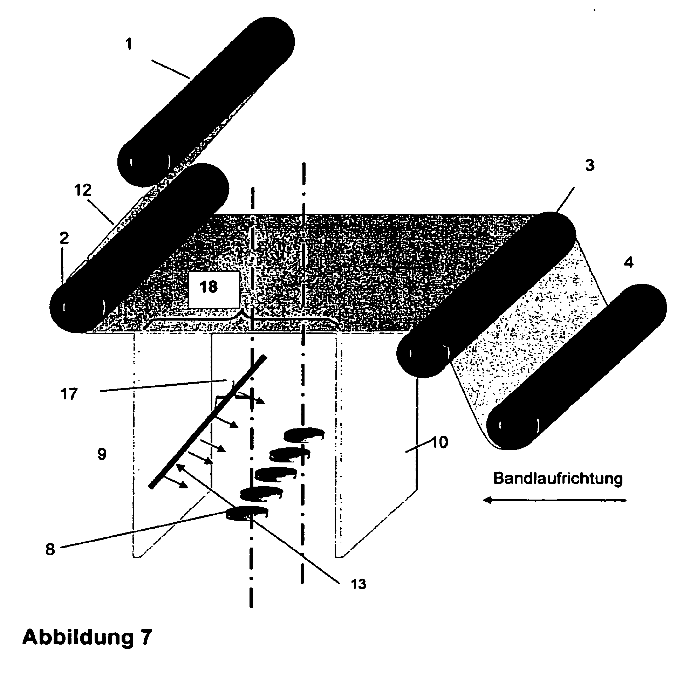

Abbildung 7 zeigt die schematische Anordnung mehrerer Verdampferquellen, die über die Breite des linear beweglichen Substrates (12) fluchtend angeordnet sind. Der Sauerstoffeinlass (13) ist durch ein parallel angeordnetes Rohr mit Bohrungen dargestellt. Aus den Bohrungen tritt der Sauerstoff aus, was durch kleine Pfeile angedeutet ist. Die schematische Anordnung zeigt weiterhin die Länge L (18) der Blendenöffnung, die durch die Blenden (9) und (10) begrenzt ist. Die Blenden (9) und (10) definieren den Bedampfungsabschnitt des Substrates. Der horizontale Abstand zwischen Metallverdampfer und Sauerstoffzufuhr (13) ist mit Δl (17) angegeben.

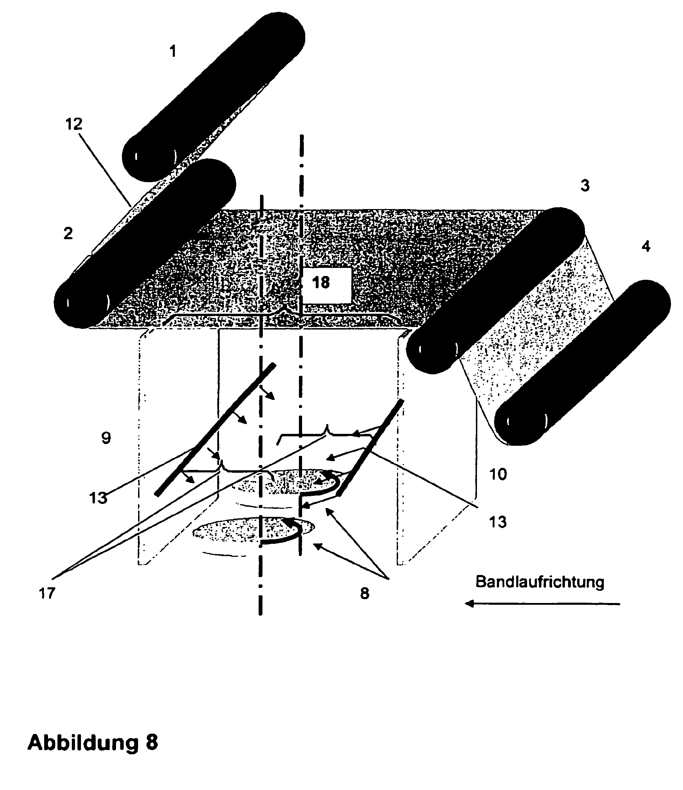

Abbildung 8 zeigt schematisch zwei Drehtiegelverdampfer 8. Durch einen Elektronenstrahl wird ein Linienmuster auf dem sich rotierenden Verdampfungsmaterial in den Drehtiegelverdampfern (8) erzeugt und somit das Verdampfungsmaterial verdampft. Aus den Bohrungen der Sauerstoffzuleitungen (13), die in Bezug auf die Linearbewegung des Substrates vor und nach den Drehtiegelverdampfern (8) angeordnet sind, tritt Sauerstoff in die Vakuumkammer ein, wobei die unterschiedlichen Pfeillängen einen unterschiedlich starken Gasfluss symbolisieren. Die schematische Anordnung zeigt weiterhin die Länge L der Blendenöffnung (18), die durch die Blenden (9) und (10) begrenzt ist. Die Blenden (9) und (10) definieren den Bedampfungsabschnitt des Substrates. Der horizontale Abstand zwischen dem Mittelpunkt der Drehtiegelverdampfer (8) und dem Mittelpunkt der Sauerstoffeinlässe (13) der Blendenöffnung (18) ist mit jeweils Δl (17) angegeben.

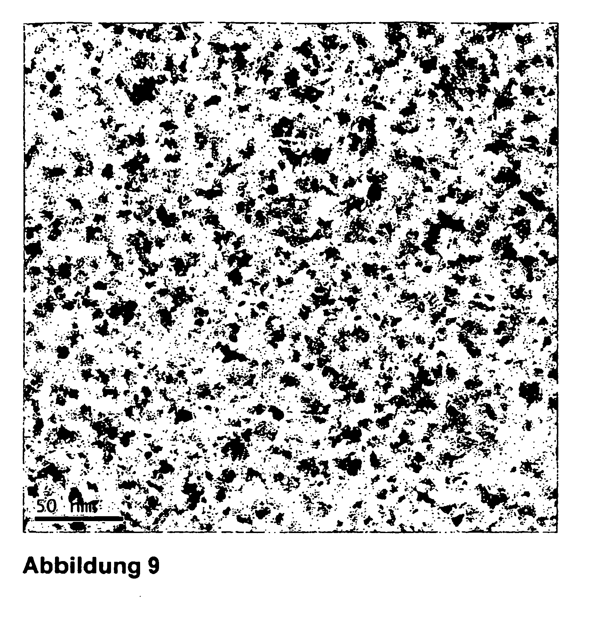

Abbildung 9 zeigt ein TEM-Bild der PVD-Schicht aus Beispiel 1 a. Die dunklen Flecke sind Metallcluster.

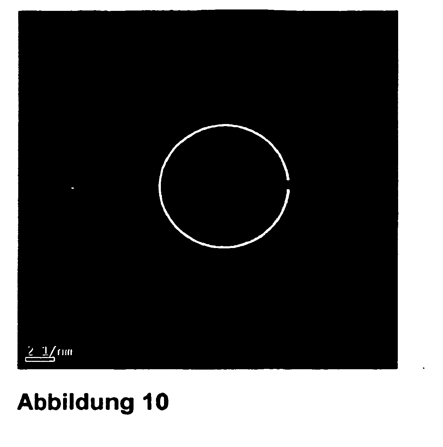

Abbildung 10 zeigt das zur Abbildung 9 der PVD-Schicht aus Beispiel 1a zugehörige Elektronenbeugungsbild. Die Beugungsreflexe sind in konzentrischen Ringen angeordnet. Der Reflex nullter Ordnung ist ausgeblendet. Die konzentrischen Ringe zeigen, dass es sich bei den schwarzen Flecken aus Abbildung 9 um Metallcluster handelt.

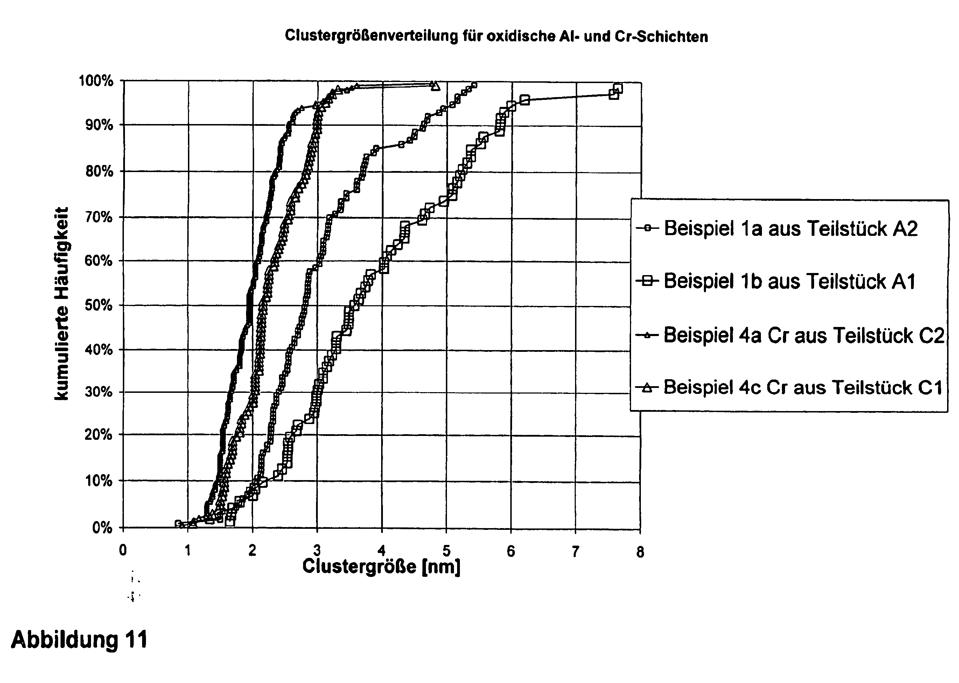

Abbildung 11 stellt die Größenverteilung der Metallcluster in den PVD-Schichten der erfindungsgemäßen Beispiele 1a, 1b, 4a und 4c grafisch dar. Aufgetragen ist die kumulierte Häufigkeit über der Clustergröße.

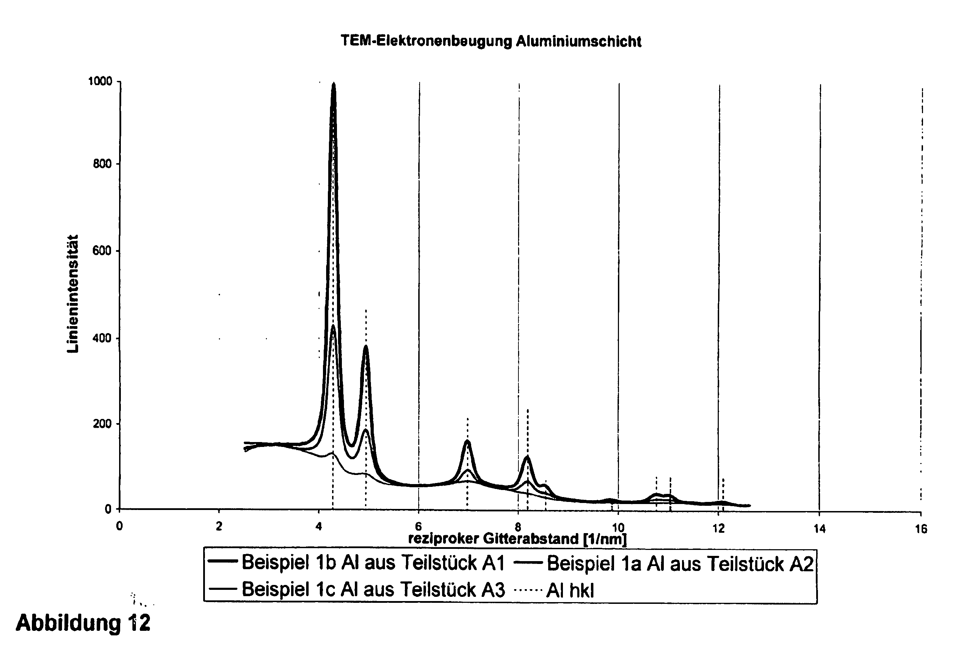

Abbildung 12 stellt die Intensitätsverteilung der Elektronenbeugungsreflexe der oxidischen Aluminiumschichten aus den erfindungsgemäßen Beispielen 1a, 1b und 1c dar. Aufgetragen ist die Reflexintensität über dem reziproken Gitterabstand.

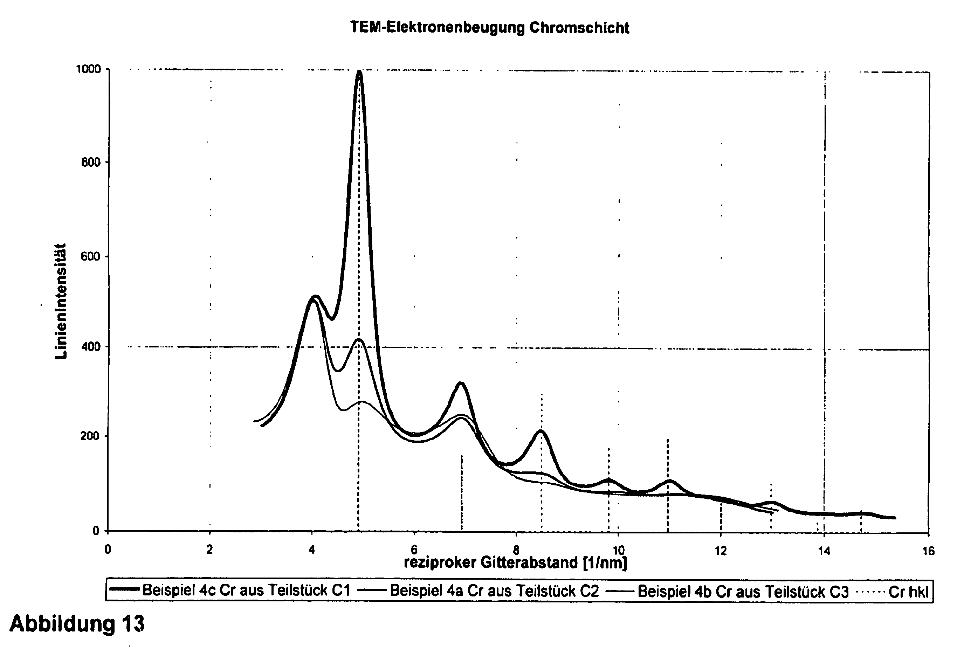

Abbildung 13 stellt die Intensitätsverteilung der Elektronenbeugungsreflexe der oxidischen Chromschichten dar aus den erfindungsgemäßen Beispielen 4a, 4b und 4c dar Aufgetragen ist die Reflexintensität über dem reziproken Gitterabstand.

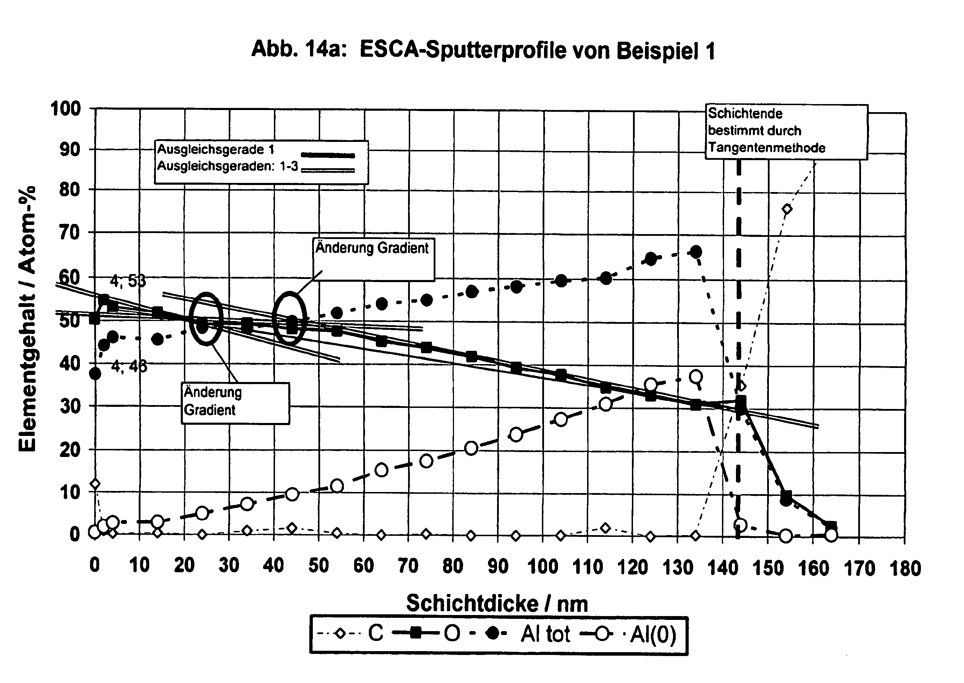

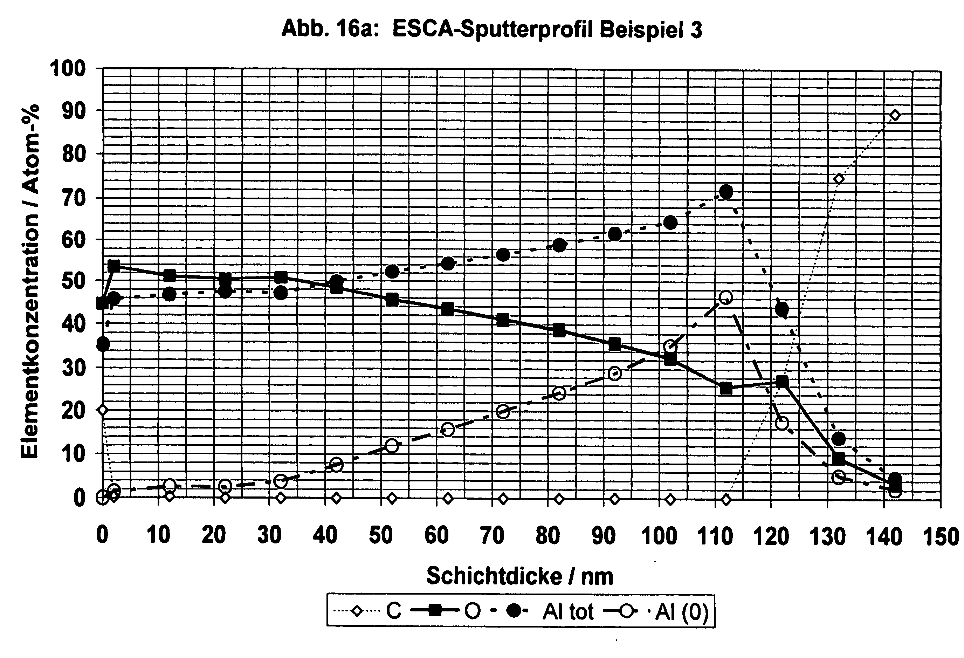

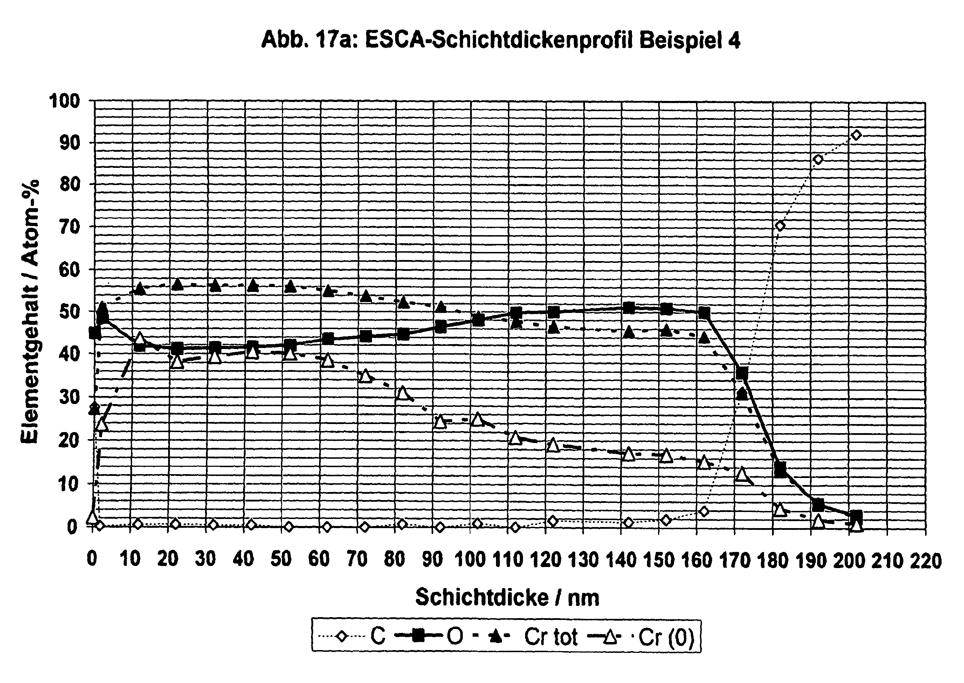

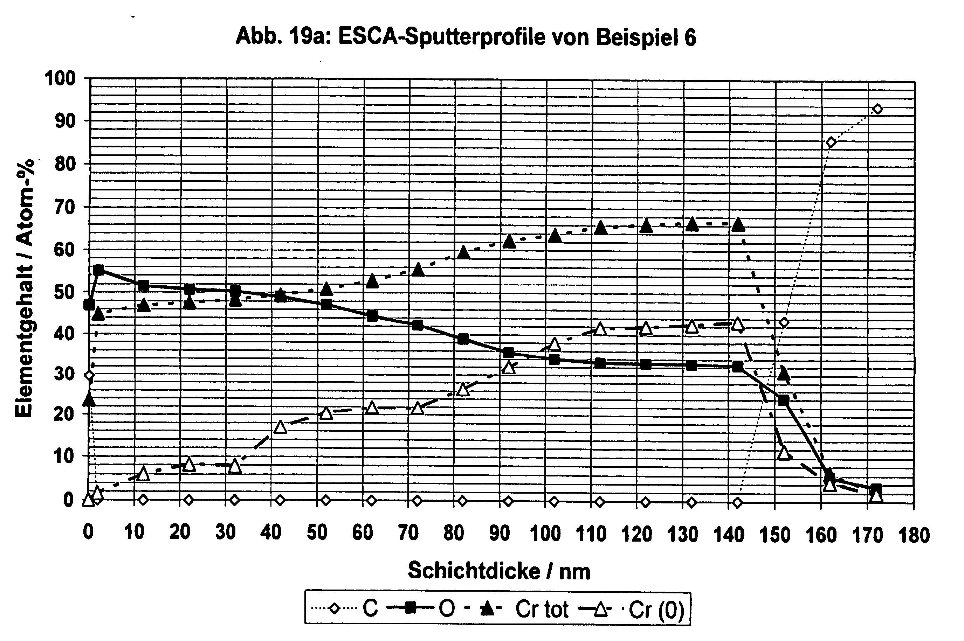

Abbildungen 14a, 15a, 16a, 17a, 18a, 19a und 20a stellen jeweils mittels XPS/ESCA-Sputterprofilen bestimmte Konzentrationsverteilungen der Elemente Kohlenstoff (C), Sauerstoff (O), die Gesamtkonzentrationen an Al (tot) bzw. Cr (tot) und den zugehörigen Konzentrationsverteilungen an elementaren Metall Al(0) bzw. Cr(0) für die erfindungsgemäßen Beispiele 1 bis 6 und das Vergleichsbeispiel 8 dar.

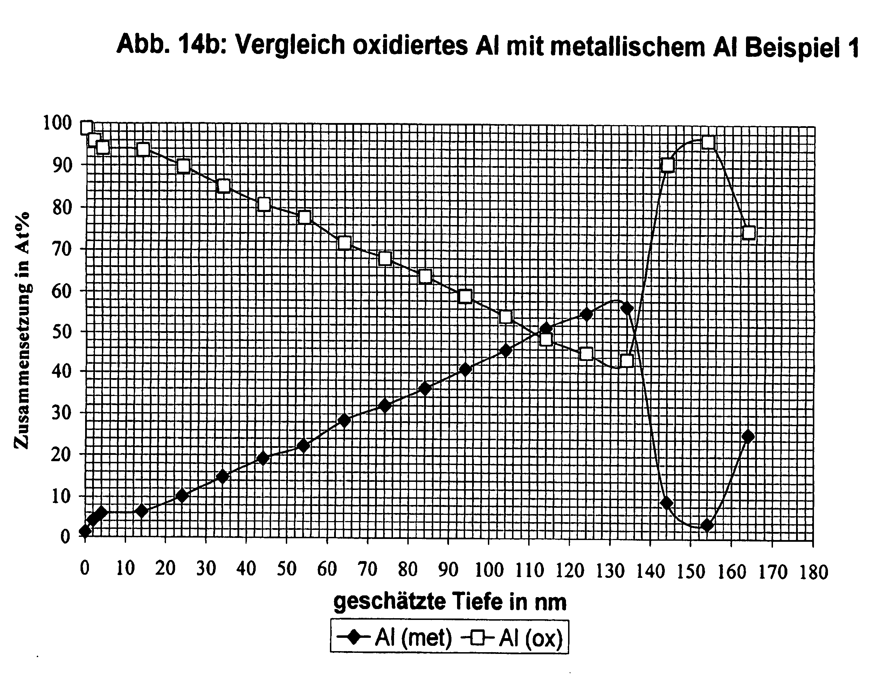

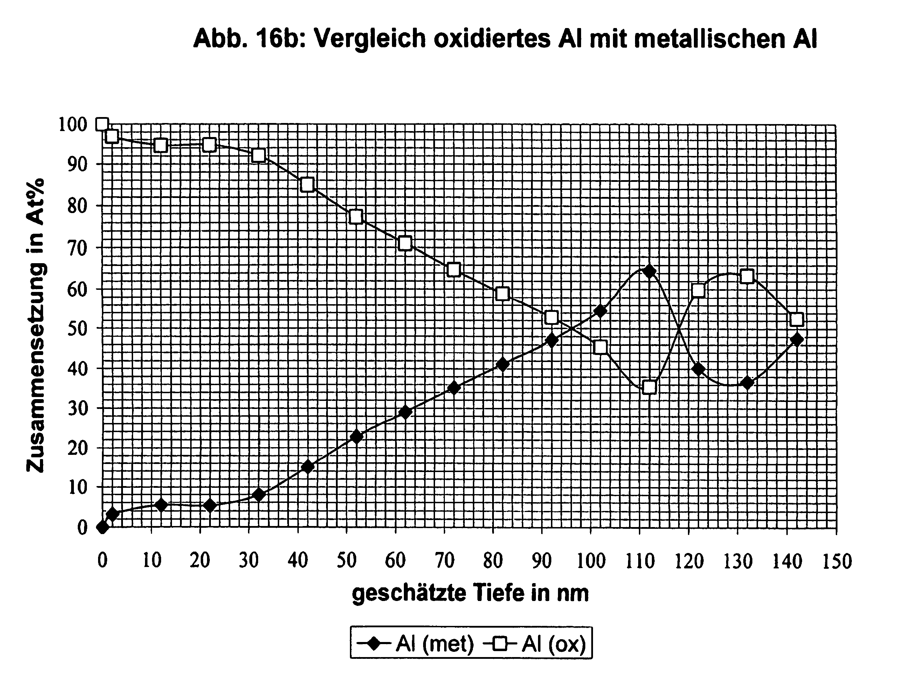

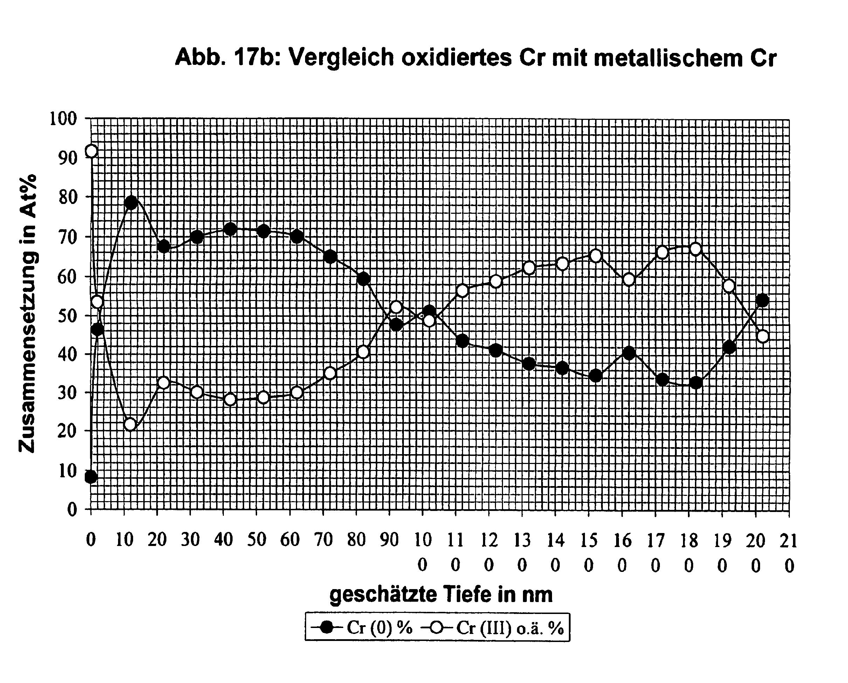

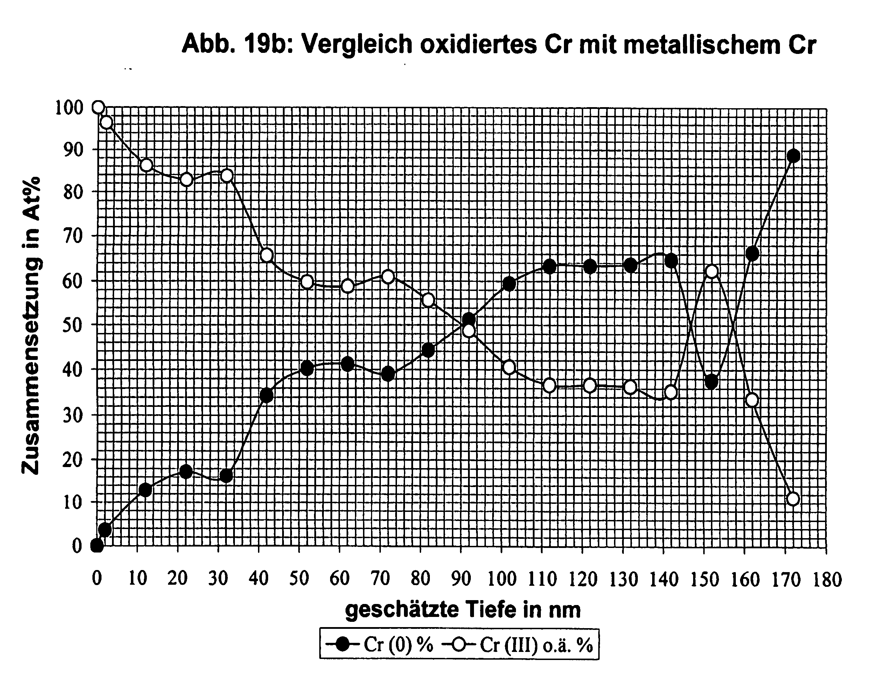

Abbildungen 14b, 15b, 16b, 17b, 18b, 19 b und 20 b stellen jeweils das Verhältnis von elementarem Metall zu oxidierten Metall in Atom-% über die Schichtdicke dar, wobei diese Abbildungen zu den Abbildungen 14a, 15a, 16a, 17a, 18a bzw. 19a korrespondieren, jedoch ohne den Anteil an Sauerstoff.

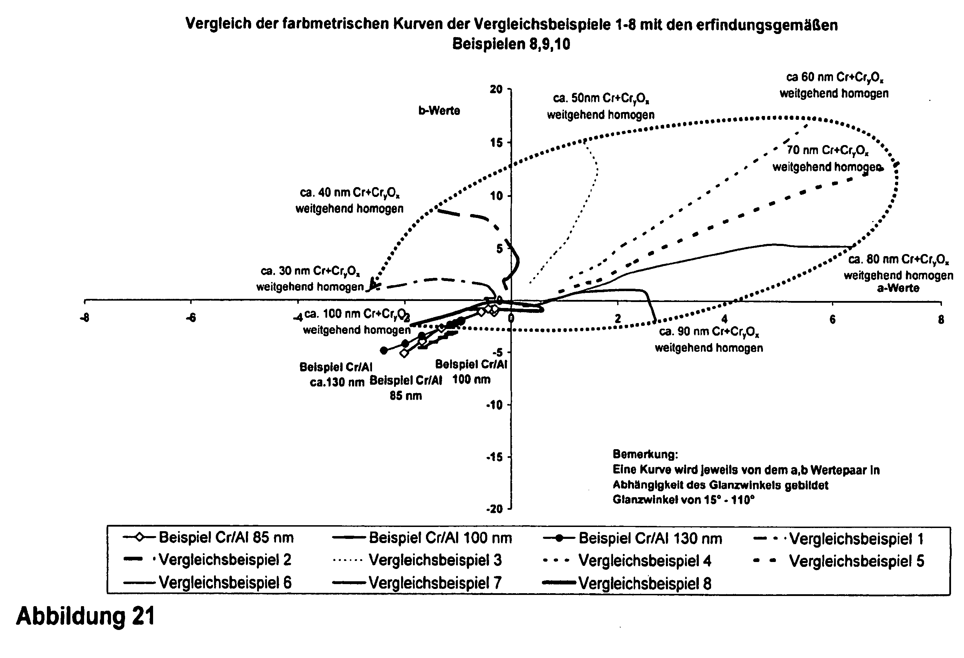

Abbildung 21 stellt farbmetrische CIELAB Daten in der a*,b*-Ebene verschiedener Beispiele und Vergleichsbeispiele dar.

### Beispiele

Im Folgenden wird die Herstellung der erfindungsgemäßen PVD-Metalleffektpigmente anhand von Beispielen beschrieben, ohne die Erfindung zu beschränken.
**Teil A:** Herstellung der erfindungsgemäßen PVD-Metalleffektpigmente anhand der erfindungsgemäßen Beispiele 1-10 unter Bezug auf die Vergleichsbeispiele 1-8, die den Stand der Technik veranschaulichen.
**Teil B:** Charakterisierung des strukturellen Aufbaus der erfindungsgemäßen PVD-Metalleffektpigmente gemäß den Beispielen 1 bzw. 1 a, 1 b sowie 1 c und den Beispielen 4 bzw. 4a, 4b sowie 4c anhand von TEM Messungen (Durchsicht, Beugung).
**Teil C:** Charakterisierung des strukturellen Aufbaus der erfindungsgemäßen Pigmente anhand von EDX-Messungen.
**Teil D:** Charakterisierung des Verlaufs an Sauerstoff bzw. Metall über die Schichtdicke von der oberen Fläche A zur unteren Fläche B anhand der erfindungsgemäßen Beispiele 1, 2 sowie 3 (Basis Al) und der erfindungsgemäßen Beispiele 4, 5 sowie 6 (Basis Cr). Ein Vergleich zum Stand der Technik erfolgt anhand des Vergleichsbeispiels 8, das dem Beispiel 1 der DE 10 2007 007 908 A1 entspricht.
**Teil E:** Farbmetrische Bewertung der erfindungsgemäßen PVD-Metalleffektpigmente gemäß den erfindungsgemäßen Beispielen mit Bezug auf PVD-Metalleffektpigmente gemäß den Vergleichsbeispielen 1 bis 8 (PVD-Metalleffektpigmente mit weitgehend homogener Zusammensetzung ohne Gradienten).
**Teil A: Herstellung der erfindungsgemäßen PVD-Metalleffektpigmente gemäß den erfindungsgemäßen Beispielen 1-10**

### Schritt 1: Beschichtung der Trägerfolie

Die allgemeine Herstellung der PVD-Metalleffektpigmente gemäß den erfindungsgemäßen Beispielen 1-10 erfolgte jeweils mit unterschiedlichen PVD-Bandanlagen gemäß den schematischen Abbildungen 2, 7 und 8.

Es wurde Polyethylenterephthalat-(PET)-Folie mit einer Dicke von 23 µm, welche mit einem Releasecoat beschichtet war, als Substrat verwendet. Der Releasecoat bestand aus acetonlöslichem Methylmethacrylatharz und wurde in einem separaten Arbeitsschritt auf herkömmliche Weise vorab aufgebracht.

Als Verdampfungsverfahren wurde entweder das ElektronenstrahlVerdampfungsverfahren oder das widerstandsbeheizte Verdampfungsverfahren verwendet.

Weiterhin wurde zwischen einem einstufigen und einem zweistufigen Beschichtungsverfahren unterschieden.

Das einstufige Verfahren beschreibt die Herstellung von PVD-Metalleffektpigmenten gemäß erfindungsgemäßen Beispielen mit einem einzigen Beschichtungsschritt. Das zweistufige Verfahren beschreibt die Herstellung von PVD-Metalleffektpigmenten gemäß erfindungsgemäßen Beispielen durch zwei aufeinanderfolgende separate Beschichtungsschritte.

Die Kontrolle der Schichtdicken der aufgedampften PVD-Metallschicht erfolgte über die erzeugte Massenbelegung. Die erzeugte Massenbelegung wird dabei vom Substratabstand zum Metallverdampfer, der Länge L der Blendenöffnung, der Bandgeschwindigkeit des Substrates und der jeweiligen Verdampfungsrate bestimmt.

Der für die Beispiele benötigte Gasfluss wurde durch einen Gasflussregler (Mass Flow Controller) der Firma MKS, München, Deutschland, zugeführt. Der Ort der jeweiligen Sauerstoffzuführung ist in den Abbildungen 3, 5, 7 und 8 schematisch dargestellt.

Die Massenbelegung wurde bei den erfindungsgemäßen Beispielen 1 bis 3 unter Verwendung eines Schwingquarzes auf herkömmliche Weise bestimmt.

Bei den erfindungsgemäßen Beispielen 4 bis 6 und den Vergleichsbeispielen wurde die Massenbelegung nach Ablösung von der Folie durch Auswaage ermittelt.

### Schritt 2: Ablösung von der Trägerfolie und Zerkleinerung

Nach erfolgter physikalischer Dampfabscheidung wurden die einzelnen PVD-Schichten bzw. PVD-Schichtpakete gemäß den jeweiligen Beispielen von der Trägerfolie durch das Ablösen mit Lösemittel von dem mit releasecoatbeschichteten Substrat erreicht. Bei den so erhaltenen Suspensionen wurden Reste der Trennschicht ("Releasecoat") mit Lösemittel von den abgelösten PVD-Schichten bzw. PVD-Schichtpaketen getrennt und gewaschen und die PVD-Schichten bzw. PVD-Schichtpakete wurden danach mit einem Zerkleinerungswerkzeug auf die gewünschte Partikelgröße zerkleinert.

Nach einem in Teil E beschriebenen Vorgehen wurden für die farbmetrische Beurteilung der erfindungsgemäßen Beispiele mit Vergleichsbeispielen Farbansätze erstellt.

Die jeweiligen Verfahrensparameter für die erfindungsgemäßen Beispiele 1-10 sind in Tabelle 1 a erfasst.

**Tabelle 1a: Verfahrensparameter für Beispiele 1-10**

| **Probe** | **Schichtabschnitte** / **aufgedampfte Komponente** / **Sauerstoff-position** | **Kammer-vakuum [1*10⁻⁴ mbar]** | **Massen-belegung [g*m⁻²]** | **Gasfluss [slm]** | **(Horizontaler) Abstand Mittelpunkt Metallverdampfer zu Mittelpunkt Sauerstoffeinlass** Δl **bezogen auf die Länge L der Blendenöffnung in [%]** | **Bandge-schwindig-keit [m*min⁻¹]** | **Art des Band-Verfahrens** |
|---|---|---|---|---|---|---|---|
| Erf.-gem. Beispiel 1 | Al; | | 0,35 | | 0,9 100*22/22 = 100 | | |
| | (Oxid von rechts) | ca.7,5- 8 | | 0,9 | | 8 | einstufig |
| | | | | | | | |
| Erf.-gem. Beispiel 1a | Al aus Teilstück A2 | ca.7,5-8 | | 0,9 | 100*22/7 = 314,3 | 8 | |
| Erf.-gem. Beispiel 1b | Al aus Teilstück A1 | ca.7,5-8 | | 0,9 | 100*22/5 = 440 | 8 | |
| Eff.-gem. Beispiel 1c | Al aus Teilstück A3 | ca.7,5- 8 | | 0,9 | 100*22/10 = 220 | 8 | |
| Erf.-gem. Beispiel 2 | Al | | | | | | zweistufig |
| | 2a aus Teilstück A1 (keine Sauerstoffzufuhr) | 2,2 | 0,365 | 0 | | 8 | |
| | 2b aus Teilstück A2+A3 (Oxid von rechts) | 5,5 | | 0,9 | 100*22/17 = 129,4 | 4,3 | |
| Erf.-gem. Beispiel 3 | Al | | | | 100*14/18 = 77,8 | | einstufig |
| | (Oxid von links) | 10 | 0,33 | | | 33 | |
| | | | | | | | |
| Erf.-gem. | Cr | | | | 100*0/19 = 0 | | einstufig |
| Beispiel 4 | (Oxid zentral über dem Verdampfer) | 5 | 0,61 | 0,65 | | 6,4 | |
| | | | | | | | |
| Erf.-gem. Beispiel 4a | Cr aus Teilstück C2 | 5 | | 0,65 | 100*0/7 = 0 | 6,4 | |
| Erf.-gem. Beispiel 4b | Cr aus Teilstück C3 | 5 | | 0,65 | 100*0/5 = 0 | 6,4 | |
| Erf.-gem. Beispiel 4c | Cr aus Teilstück C1 | 5 | | 0,65 | 100*0/7 = 0 | 6,4 | |
| Erf.-gem. Beispiel 5 | Cr | | | | | | zweistufig |
| | 5a aus Teilstück C1 (keine Sauerstoffzufuhr) | ca. 3 | 0,46 | 0 | | 6.4 | |
| | 5b aus Teilstück C2+C3 (Oxid zentral über dem Verdampfer) | ca.3 | | 0,9 | 100*0/12 = 0 | 6,4 | |
| Erf.-gem. Beispiel 6 | Cr | | | | | | einstufig |
| | (Oxid von links) | ca. 6 | 0,7 | 1,5 | 100*10/20 = 50 | 60 | |
| | (Oxid von rechts) | | | 3,5 | 100*10/20 = 50 | | |
| Erf.-gem. Beispiel 7 | Al | | | | | | zweistufig |
| | 7a (Oxid zentral über den Verdampfern) | 20 | 0,71 | 5*1 | 100*0/18 = 0 | 18 | |
| | 7b (kein Oxid) | 2 | 0,108 | 0 | | 18 | |
| Erf.-gem. Beispiel 8 | Al | | | | | | zweistufig |
| | 8a Al (kein Oxid) | 1 | 0.068 | 0 | | 18 | |
| | 8b Cr (Oxid zentral) | 2 | ca.0,2 -0,3 | 0,7 | 100*0/20 = 0 | 13 | |
| Erf.-gem. Beispiel 9 | | | | | | | zweistufig |
| | 9a Al (kein Oxid) | 1 | 0.108 | 0 | | 12,5 | |
| | 9b Cr (Oxid zentral) | 2 | ca. 0,2 -0,3 | 0,7 | 100*0/20 = 0 | 13 | |
| Erf.-gem. Beispiel 10 | | | | | | | zweistufig |
| | 10a Al (kein Oxid) | 1 | 0,189 | 0 | | 7 | |
| | 10b Cr (Oxid zentral) | 2 | ca. 0,2 -0,3 | 0,7 | 100*0/20 = 0 | 13 | |

Die Verfahrensparameter für die Herstellung der PVD-Metalleffektpigmente gemäß den Vergleichsbeispielen 1-8 sind in Tabelle 1 b erfasst.

**Tabelle 1b: Verfahrensparameter für Vergleichsbeispiele 1-8**

| **Probe** | **Schichten-folge / aufgedampfte Komponenten** | **Kammervakuum [1*10⁻⁴ mbar]** | **Massen-belegung [g*m⁻²]** | **Gasfluss [slm]** | **Art des Bandverfahrens** | **Bandgeschwindigkeit [m*min⁻¹]** |
|---|---|---|---|---|---|---|
| Vgl.-Beispiel 1 | | | | | | |
| | Cr | 3,0 | 0,2 | Keiner* | einstufig | 0,5 |
| | | | | | | |
| Vgl.-Beispiel 2 | | | | | | |
| | Cr | 3,3 | 0,3 | Keiner* | einstufig | 0,5 |
| | | | | | | |
| Vgl.-Beispiel 3 | | | | | | |
| | Cr | 2,77 | 0,37 | Keiner* | einstufig | 0,5 |
| | | | | | | |
| Vgl.-Beispiel 4 | | | | | | |
| | Cr | 2,8 | 0,44 | Keiner* | einstufig | 0,5 |
| | | | | | | |
| Vgl.-Beispiel 5 | | | | | | |
| | Cr | 3,0 | 0,51 | Keiner* | einstufig | 0,5 |
| | | | | | | |
| Vgl.-Beispiel 6 | | | | | | |
| | Cr | 2,7 | 0,59 | Keiner* | einstufig | 0,5 |
| | | | | | | |
| Vgl.-Beispiel 7 | | | | | | |
| | Cr | 2,8 | 0,65 | Keiner* | einstufig | 0,5 |
| | | | | | | |
| Vgl.-Beispiel 8 | | | | | | |
| | Cr | 3,6 | 0,67 | Keiner* | einstufig | 0,5 |
| | | | | | | |

* Bei den Vergleichsbeispielen 1 bis 8 erfolgte keine zusätzliche Sauerstoffzufuhr. Es wurde bei einem deutlich schlechteren Kammervakuum als bei den erfindungsgemäßen Beispielen gearbeitet. Der Anteil an Restsauerstoff in der Kammer war hoch genug, um auch eine reaktive Verdampfung zu bewirken, d.h. die Bildung von Metalloxid aus vorhandenem Sauerstoff und verdampften elementarem Metall.

Die PVD-Metalleffektpigmente gemäß den Vergleichsbeispiele 1 bis 8 konnten nur bei geringen Bandgeschwindigkeiten von 0,5 m/min hergestellt werden.

Die Bandgeschwindigkeiten bei der Herstellung der PVD-Metalleffektpigmente gemäß den erfindungsgemäßen Beispielen hingegen waren wesentlich höher und lagen in einem Bereich von 4 bis 60 m/min.

### Herstellung der PVD-Schichten gemäß den erfindungsgemäßen Beispielen 1, 3, 4 und 6 unter Verwendung des einstufigen Bandverfahrens:

Um den asymmetrischen strukturellen Aufbau der PVD-Schicht der PVD-Metalleffektpigmente gemäß den erfindungsgemäßen Beispielen im einstufigen Verdampfungsverfahren zu veranschaulichen, wurde wie folgt verfahren:

Um den Aufbau der PVD-Schicht gemäß den erfindungsgemäßen Beispielen 1 und 4 darstellen zu können, erfolgte die Beschichtung mit einer PVD-Vorrichtung mit Anordnung von Metallverdampfer, Sauerstoffzuführung und Blendenanordnung für Beispiel 1, wie schematisch in Abbildung 3 gezeigt, bzw. für Beispiel 4, wie schematisch in Abbildung 5 gezeigt.

Die Aufteilung der PVD-Schicht in einzelne Schichtabschnitte bzw. Teilstücke über die Schichtdicke erfolgte, indem Längsblendenöffnungen über dem Bedampfungsabschnitt des Substrates angeordnet wurden, wie in Abbildung 4 im Zusammenhang mit der in Abbildung 3 dargestellten Anordnung bzw. in Abbildung 6 im Zusammenhang mit der in Abbildung 5 dargestellten Anordnung gezeigt ist. In den schematischen Abbildungen 4 und 6 sind die Schichtabschnitte A2 (erf. gem. Bsp. 1a), A1 (erf. gem. Bsp. 1b) und A3 (erf. gem. Bsp. 1c) für Beispiel 1 bzw. die Schichtabschnitte C2 (erf. gem. Bsp. 4a), C3 (erf. gem. Bsp. 4b), C1 (erf. gem. Bsp. 4c) für Beispiel 4 jeweils in der Draufsicht gezeigt.

Die in der schematischen Abbildung 4 gezeigte Draufsicht zeigt mithin für Beispiel 1 folgende Beschichtungsreihenfolge der Schichtabschnitte: A1 dann A2 dann A3 in Bandrichtung.
Beispiel 1a: Zweiter Schichtabschnitt A2 der Schicht aus Beispiel 1
Beispiel 1b: Erster Schichtabschnitt A1 der Schicht aus Beispiel 1
Beispiel 1c: Dritter Schichtabschnitt A3 der Schicht aus Beispiel 1

Der Sauerstoffgehalt in den Schichtabschnitten, in Tabelle 1a als Teilstücke bezeichnet, steigt von A1 nach A2 nach A3 an. Dies wird durch die asymmetrische Anordnung der Sauerstoffzuführung in Bezug auf den Metallverdampfer und den Bedampfungsabschnitt auf dem Substrat, wie in Abbildung 3 gezeigt, bewirkt. Nachträglich durchgeführte Offlinetransmissionsmessungen haben dieses Ergebnis bestätigt. Bei dem Schichtabschnitt A1 wurde eine Transmission von 32 %, bei dem Schichtabschnitt A2 wurde eine Transmission von 46 % und bei dem Schichtabschnitt A3 wurde eine Transmission von 86 % gemessen. Je größer die Transmission desto größer ist der Anteil an transparentem Metalloxid.

Die in der schematischen Abbildung 5 gezeigte Draufsicht zeigt mithin für Beispiel 4 folgende Beschichtungsreihenfolge der Schichtabschnitte: C3 dann C2 dann C1 in Bandrichtung
Beispiel 4a: Zweiter Schichtabschnitt C2 der Schicht aus Beispiel 4
Beispiel 4b: Erster Schichtabschnitt C3 der Schicht aus Beispiel 4
Beispiel 4c: Dritter Schichtabschnitt C1 der Schicht aus Beispiel 4

Der Sauerstoffgehalt in den Schichtabschnitten, in Tabelle 1a als Teilstücke bezeichnet, steigt von C1 nach C2 nach C3 an. Dies wird durch die asymmetrische Anordnung der Blendenöffnung bzw. des Bedampfungsabschnitts in Bezug auf die Sauerstoffzuführung und den Metallverdampfen wie in Abbildung 5 gezeigt, bewirkt. Nachträglich durchgeführte Offlinetransmissionsmessungen haben dieses Ergebnis bestätigt.

Bei dem Schichtabschnitt C1 wurde eine Transmission von 54 %, bei dem Schichtabschnitt C2 wurde eine Transmission von 77 % und bei dem Schichtabschnitt C3 wurde eine Transmission von 92 % gemessen. Je größer die Transmission desto größer ist der Anteil an transparentem Metalloxid.

Bei dem erfindungsgemäßen Beispiel 3 wurde eine PVD-Anordnung von Metallverdampfern und Sauerstoffzuführung verwendet, wie schematisch in Abbildung 7 gezeigt. Bei dem erfindungsgemäßen Beispiel 6 wurde eine PVD-Anordnung von Metallverdampfern und Sauerstoffzuführung verwendet, wie schematisch in Abbildung 8 gezeigt. Bei diesen PVD-Anordnungen wurden jeweils quer zur Bandlaufrichtung des Substrates weitere Verdampferquellen eingesetzt, um eine weitgehend homogene Abscheidung des Beschichtungsmaterials über die Breite der PET-Folie (Beschichtungsbreite ca. 50 cm) zu erzielen.

### Herstellung von PVD-Schichten bei den erfindungsgemäßen Beispielen 2, 5, 7, 8, 9 und 10 nach dem zweistufigen Bandverfahren:

Um analytisch den Übergang zweier PVD-Schichten zwischen einstufigen und zweistufigen Bandverfahren mittels EDAX- bzw. der XPS-Methode aufzuzeigen, wurden hierfür die PVD-Schichten gemäß den erfindungsgemäßen Beispiele 2 und 5 nach einem zweistufigen Bandverfahren hergestellt.

Zur Herstellung der erfindungsgemäßen PVD-Metalleffektpigmente gemäß erfindungsgemäßem Beispiel 2 wurden zunächst die Blendenöffnungen zur Erzeugung der Schichtabschnitte A2 und A3 gemäß der Draufsicht in Abbildung 4 abgedeckt und durch Bedampfen von Aluminium der Schichtabschnitt A1 (Beispiel 2a) erzeugt. In diesem Fall wurde kein Gas zugeführt, um eine metallische Schicht zu erzeugen. Nach dieser ersten Beschichtung des Substrates wurde das Bandsubstrat zurückgespult und die Blendenöffnungen zur Erzeugung der Schichtabschnitte A2 und A3 geöffnet; jedoch die Blendenöffnung des Schichtabschnitts A1 abgedeckt. Die 2. Schicht 2b wurde nunmehr unter Sauerstoffzufuhr gemäß den in Tabelle 1a angegebenen Verfahrensparametern aufgedampft, um einen PVD-Schichtaufbau aus einer PVD-Metallschicht und einer PVD-Metall-Metalloxidschicht zu erzeugen.

Zur Herstellung der erfindungsgemäßen PVD-Metalleffektpigmente gemäß erfindungsgemäßem Beispiel 5 wurden zunächst die Blendenöffnungen der Schichtabschnitte C2 und C3 gemäß der Draufsicht in Abbildung 6 abgedeckt und das Beispiel 5a aus dem Schichtabschnitt C1 erzeugt. In diesem Fall wurde auf eine Gaszuführung verzichtet, um eine metallische Schicht zu erzeugen. Nach dieser ersten Beschichtung des Substrates wurde das Bandsubstrat zurückgespult und die Blendenöffnungen zur Erzeugung des Beispiels 5b aus den Schichtabschnitten C2 und C3 geöffnet, jedoch die Blendenöffnung zur Erzeugung des Schichtabschnittes C1 abgedeckt. Die 2. Schicht 5b wurde nunmehr unter Sauerstoffzufuhr gemäß den in Tabelle 1 a angegebenen Verfahrensparametern oxidischer abgeschieden.

Zur Erzeugung des erfindungsgemäßen Beispiels 7 wurde eine PVD-Anordnung gewählt, die der schematischen Anordnung in Abbildung 7 entspricht. Im Unterschied zu dem erfindungsgemäßen Beispiel 3 wurden sehr dicht neben den einzelnen widerstandsbeheizten Verdampfungsschiffchen (Metallverdampfern) jeweils einzelne Sauerstoffquellen angeordnet.

Durch diese Anordnung der Sauerstoffzuführung wurde eine sehr oxidreiche PVD-Aluminiumschicht (Beispiel 7b) erzeugt. In einem zweiten Beschichtungsschritt wurden Teilstücke dieser oxidreichen PVD-Aluminiumschicht mit einer zweiten sehr metallischen Aluminiumschicht Beispiel 7b gemäß Abbildung 2 ohne Sauerstoffzufuhr mit einem widerstandsbeheizten PVD-Verdampfungsverfahren beschichtet.

Um die Unabhängigkeit der Farbigkeit von der Schichtdicke der metallischen Aluminiumschicht zu verdeutlichen, wurden die erfindungsgemäßen Beispiele 8, 9 und 10 erstellt.

Es wurden hier drei Aluminium-Grundbeschichtungen gemäß Abbildung 2 durch Elektronenstrahlverdampfungsverfahren erzeugt. Durch Variation der Bandgeschwindigkeit wurden drei Aluminiumschichten unterschiedlicher Schichtdicken gemäß den 8a, 9a und 10a erzeugt. Nach Abschluss der Beschichtung wurde das beschichtete Bandsubstrat zurückgespult und nachfolgend jeweils mit einer oxidischen Cr-Schicht (Beispiele 8b, 9b und 10b) beschichtet, die eine weitgehende Blaufärbung auf den drei Al-Schichten unterschiedlicher Schichtdicke bei den Beispielen 8, 9 und 10 bewirkte.

Die als Einzelschicht goldbräunlich wirkende Cr-Schicht der Beispiele 8b, 9b und 10b erzeugte somit auf den unterschiedlichen Aluminiumschichtdicken jeweils die gleiche Blaufärbung. Dies ist insofern ein wesentlicher Vorteil, als dass bei dem Effektpigment die Farbgebung nur von der Schichtdicke der metallischen Chrom-/Chromoxidschicht abhängig ist. Mithin ist eine wesentlich bessere Reproduzierbarkeit des Farbtons möglich, als bei Effektpigmenten, bei denen zwei Schichtdicken zum Farbeffekt beitragen.

### Teil B: Klärung des strukturellen Aufbaus der erfindungsgemäßen Pigmente mittels TEM (Elektronenbeugung, Transmission)

Zur Aufklärung des strukturellen Aufbaus der erfindungsgemäßen PVD-Metalleffektpigmente wurden die Schichtabschnitte der PVD-Metalleffektpigmente mittels Transmissionselektronenmikroskopie (TEM) untersucht. Als Gerät wurde ein Zeiss 922 Omega (Fa. Zeiss) verwendet. Dieses war mit einem CCD-Detektor vom Typ Ultrascan 1000 (Fa. Gatan) bestückt. Als abbildendes Medium diente ein Elektronenstrahl, der die PVD-Metalleffektpigmente bzw. deren Schichtabschnitte gleichmäßig und weitgehend parallel durchleuchtete. Die Beschleunigungsspannung betrug 200 kV. Die Elektronen wurden an Inhomogenitäten in der Probe gestreut und an Gitterstrukturen gebeugt. Nach dem Verlassen der Schicht wurden die Elektronen durch eine Elektronenoptik in die Zwischenbildebene fokussiert und nach dem Durchlaufen einer weiteren Vergrößerungsstufe mittels eines elektronischen CCD-Kamerasystems abgebildet. Man erhielt auf diese Weise ein reelles Abbild der durchleuchteten Schicht. Die Abbildung 9 zeigt beispielhaft das TEM-Bild der Schicht aus dem erfindungsgemäßen Beispiel 1a.

Neben dem reellen Abbild gibt auch das Elektronenbeugungsbild der Probe wichtige Informationen über die Beschaffenheit der Schicht. Man erhielt es, indem nicht die Zwischenbildebene, sondern die Beugungsebene vergrößert abgebildet wurde. Aus der Intensität und Lage der Beugungsreflexe lassen sich eindeutige strukturelle Aussagen über den inneren Aufbau der Pigmente treffen. Abbildung 10 zeigt beispielhaft ein Elektronenbeugungsbild der Schicht aus Beispiel 1a.

Von den erfindungsgemäßen PVD-Metalleffektpigmenten der erfindungsgemäßen Beispiele 1a, 1b, 1c. 4a, 4b und 4c wurden mit dem TEM reelle Bilder und Elektronenbeugungsbilder aufgenommen. Es zeigte sich, dass das Material nicht homogen war, sondern im Wesentlichen aus einer oxidischen Matrix bestand, in die winzige Metallcluster eingebettet waren (siehe schwarze Flecken in Abbildung 9). Es ließen sich in allen PVD-Metalleffektpigmenten gemäß den erfindungsgemäßen Beispielen Metallcluster nachweisen, die wenige Nanometer groß waren. Für eine genauere Bestimmung der Größe der Metallcluster wurden deren Durchmesser bei den PVD-Schichten gemäß den erfindungsgemäßen Beispielen 1a, 1 b, 4a und 4c an jeweils ca. 100 Metallclustern vermessen und aus diesen Messwerten eine Größenstatistik erstellt (Abbildung 11). Die Cluster der Proben 1 c und 4b waren so klein, dass sie nicht mit ausreichender Genauigkeit vermessen werden konnten. Die Auswertung zeigte, dass die Größe der Metallcluster, aber nicht ihre Anzahl, mit steigendem Oxidgehalt abnahm. Die Größe der Metallcluster lag im Mittel unter 5 nm, wobei die Aluminiumcluster insgesamt etwas größer als die Chromcluster waren.

Elektronenbeugungsbilder wurden von den Pigmenten der Beispiele 1a, 1b, 1c, 4a, 4b und 4c aufgenommen. Da die Bilder durch das CCD - Kamerasystem in elektronischer Form vorlagen war es möglich, nicht nur die Lage der Reflexe, sondern auch deren Intensitätsverteilung auszuwerten. Es zeigte sich, dass die Beugungsmaxima in ihrer Lage und Intensitätsverteilung exakt zu den aus der Literatur bekannten Werten für metallisches Aluminium bzw. Chrom passten. Damit war die Existenz dieser Metallcluster sicher nachgewiesen. Die Reflexe waren bei allen Proben deutlich verbreitert. Das zeigte, dass die beugenden Metallkristallite nur wenige Nanometer groß sein konnten. Gleichzeitig war zu erkennen, dass die Reflexintensitäten mit steigendem Oxidgehalt abnahmen und bei einem annähernd stöchiometrischen Oxidgehalt sehr klein wurden. Das ist in Übereinstimmung mit der Tatsache, dass in diesem Fall kein aktives Metall mehr vorhanden ist. Neben den Metallclusterreflexen ließen sich keine weiteren Interferenzlinien finden. Insbesondere waren keine Linien vorhanden, die zu den verschiedenen Kristallmodifikationen der Metalloxide passen würden. Es war aber ein kontinuierlich abfallender Intensitätsuntergrund mit breiten Maxima vorhanden. Dabei handelte es sich um die typische Intensitätsverteilung amorpher Festkörper. Daher ist davon ausgehen, dass die Oxide in diesen Schichten in amorpher Form vorliegen.

Die Schichten der erfindungsgemäßen Beispiele 1a, 1b, 1c, 4a, 4b und 4c bestehen daher somit aus im Wesentlichen amorphem Metalloxid, in das nanometergroße Metallcluster eingebettet sind. Die mittlere Größe dieser Cluster sinkt mit steigendem Oxidgehalt und liegt typischerweise unter 5 nm.

### Teil C: Charakterisierung mittels REM und EDX

Analytische Sauerstoffbestimmung mittels EDX-Messungen:
Von den Schichten gemäß den erfindungsgemäßen Beispielen 1a, 1b, 1c, 4a, 4b und 4c wurden die Zusammensetzung von Sauerstoff und Metall mit der oben beschriebenen Messmethodik mittels EDX (Gerät: EDAX Gemini; Fa. EDAX Incorp., USA) ermittelt.

Probenvorbereitung:
Die Schichten wurden in einem Lösemittel dispergiert und zerkleinert. Einige Tropfen der Dispersion wurden auf einen Probenteller aufgegeben und das Lösemittel bei Raumtemperatur langsam verdampft. Dabei orientierten sich die Schichten weitgehend parallel zur Telleroberfläche.

Messung:
Von den Schichten der erfindungsgemäßen Beispiele wurde das mittlere atomare Verhältnis von Sauerstoff zu Metall bestimmt.

Dazu wurden zuerst mittels rasterelektronenmikroskopischer Aufnahmen Bereiche gesucht, an denen mindestens 4 bis 5 einzelne separate PVD-Schichten übereinanderlagen. An diesen Stellen wurde gemessen. Für die Messungen an den Aluminium/Aluminiumoxidschichten wurde eine Beschleunigungsspannung von 5 kV gewählt, für die Chrom/Chromoxidschichten wurde mit einer Spannung von 8 kV gearbeitet. Auf diese Weise wurde sichergestellt, dass für eine gute Mittelwertbildung stets mehrere Schichten gleichzeitig angeregt wurden, ohne dass der Substratuntergrund mitgemessen wurde. Es wurden jeweils für Sauerstoff die K-Linie (Anregungsenergie: ca. 0,5 keV), für Chrom die K-Linie (Anregungsenergie: ca. 5,4 keV) und für Aluminium die K-Linie (Anregungsenergie: ca. 1,5 keV) angeregt. Das angeregte Röntgenspektrum wurde ausgemessen und aus dem Peakhöhenverhältnis mit Hilfe eines Softwareprogramms der Anteil an Sauerstoff bzw. Metall bestimmt.

Die Stoffdaten für die Beispiele 7-10 und den Vergleichsbeispielen 1-8 wurden in Tabelle 2a und 2b erfasst.

**Tabelle 2a: Stoffdaten für Schichtdicken und Sauerstoffgehalte in Bezug auf erfindungsgemäße Beispiele 7 bis 10**

| **Probe** | | **Schicht bzw. Schichtabfolge des verdampften Metalls** | | | |
|---|---|---|---|---|---|
| | | | | **EDX** | |
| erf. gem. Beispiel 7 | | Al | Al sehr oxidhaltig | Al | Al sehr oxidhaltig |
| | REM-Schichtdicken [nm] | 60 | 271 | | |
| | Sauerstoff O₂ [Atom-%] | | | 13 | 67 |
| | | | | | |

| **Probe** | | **Schicht bzw. Schichtabfolge des verdampften Metalls** | | | |
|---|---|---|---|---|---|
| | | | | **EDX** | |
| erf. gem. Beispiel 8 | | 8a Al | 8b Cr oxidhaltig | 8a Al | 8b Cr oxidhaltig |
| | REM-Schichtdicken [nm] | 25 | 62. | | |
| | Sauerstoff O₂ [Atom-%] | | | 20 | 53 |
| erf. gem. Beispiel 9 | | 9a Al | 9b Cr oxidhaltig | 9a Al | 9b Cr oxidhaltig |
| | REM-Schichtdicken [nm] | 40 | 62 | | |
| | Sauerstoff O₂ [Atom-%] | | | 19 | 53 |
| erf. gem. Beispiel 10 | | 10a Al | 10b Cr oxidhaltig | 10a Al | 10b Cr oxidhaltig |
| | REM-Schichtdicken [nm] | 70 | 62 | | |
| | Sauerstoff O₂ [Atom-%] | | | 9,5 | 53 |

**Tabelle 2b: Stoffdaten für Schichtdicken und Sauerstoffgehalte in Bezug auf Vergleichsbeispiele 1 bis 8**

| **Probe** | | **Schicht bzw. Schichtabfolge des verdampften Metalls** | **EDX** |
|---|---|---|---|
| Vgl.-Beispiel 1 | | Cr | |
| | REM-Schichtdicke [nm] | ca. 46 | |
| | Sauerstoff O₂ [Atom-%] | | ca. 40-43 |
| Vgl.-Beispiel 2 | | Cr | |
| | REM-Schichtdicke [nm] | ca. 52 | |
| | Sauerstoff O₂ [Atom-%] | | ca. 40-43 |
| Vgl.-Beispiel 3 | | Cr | |
| | REM-Schichtdicke [nm] | ca. 56 | |
| | Sauerstoff O₂ [Atom-%] | | ca. 40-43 |
| Vgl.-Beispiel 4 | | Cr | |
| | REM-Schichtdicke [nm] | ca. 66 | |
| | Sauerstoff O₂ [Atom-%] | | ca. 40-43 |
| | | | |
| | | | |

| **Probe** | | **Schichtabfolge des verdampften Metalls** | **EDX** |
|---|---|---|---|
| Vgl.-Beispiel 5 | | Cr | |
| | REM-Schichtdicke [nm] | ca. 70 | |
| | Sauerstoff O₂ [Atom-%] | | ca. 40-43 |
| Vgl.-Beispiel 6 | | Cr | |
| | REM-Schichtdicke [nm] | ca. 84 | |
| | Sauerstoff O₂ [Atom-%] | | ca. 40-43 |
| Vgl.-Beispiel 7 | | Cr | |
| | REM-Schichtdicke [nm] | ca.110 | |
| | Sauerstoff O₂ [Atom-%] | | ca. 40-43 |
| Vgl.-Beispiel 8 | | Cr | |
| | REM-Schichtdicke [nm] | ca. 130 | |
| | Sauerstoff O₂ [Atom-%] | | ca. 40-43 |

### Teil D: Charakterisierung durch Photoelektronenspektroskopie (XPS/ESCA) und Sputterprofilmessungen

Zur genaueren strukturellen Charakterisierung wurden die beschichteten Folien der erfindungsgemäßen Beispiele 1 bis 6 sowie von Vergleichsbeispiel 8 mittels ESCA untersucht. Zur besseren Aufklärung der Zusammensetzungen der inneren Schichten wurden diese kontinuierlich abgesputtert (Ar*-Ionen) und jeweils neu vermessen. Hierbei wurden jeweils die Elemente Sauerstoff, Metall (Al oder Cr), Stickstoff und Kohlenstoff vermessen. Die Messungen wurden mit einem Gerät der Firma VG Scientific, Typ ESALAB 250, durchgeführt. Für die Anregung wurde monochromatische Al Kα Röntgenstrahlung verwendet (Anregungsspannung:15kV; Leistung: 150 W; Spotgröße: 500 µm). Die Transmissionsfunktion des Geräts wurde an einer Kupferprobe gemessen. Zur Ladungskompensation kam eine "Flood-Gun" mit einer Elektronenenergie von 6 eV/0,05 mA Strahlstrom zum Einsatz. Die Energieskala wurde für die Auswertung so eingestellt, dass die Kohlenstoff-Hauptlinie bei 285 eV lag.

Es wurden zunächst Übersichtsspektren mit einer Pass-Energie von 80 eV aufgenommen. Hieraus wurde die Oberflächenzusammensetzung in Atom-% der oben genannten vier Elemente quantitativ mittels sogenannter Scofield-Faktoren bestimmt, wobei der Messfehler bei ca. 10 % lag. Allen Auswertungen lag die Annahme zugrunde, dass das analysierte Volumen in sich homogen ist. Die Photoelektronenspektroskopie ist eine oberflächensensitive Methode mit einer Informationstiefe von typischerweise 5 - 10 nm.

Anschließend wurden mit einer Passenergie von 30 eV Hochauflösungsspektren der einzelnen Elemente aufgenommen. Insbesondere bei den Metallspektren konnte hier zwischen verschiedenen Oxidationsstufen des Metalls unterschieden werden.

Bei Aluminiumproben (Beispiel 1 bis 3) wurden dabei stets die Anteile von elementarem (metallischem) Aluminium und Al(III) quantitativ bestimmt. Bei Chromproben (Beispiele 4 bis 6, Vergleichsbeispiel 8) wurde elementares Chrom einerseits sowie die Oxidationsstufen Cr(III), Cr(IV) und Cr(VI) unterschieden.

Die sich teilweise überlappenden Energiespektren wurden mittels bekannter, standardisierter Verfahren angeglichen bzw. verglichen. Bei allen Chromproben konnte dabei kein messbarer Anteil an Chrom(VI) nachgewiesen werden.

Mittels Absputtern gemäß Herstellerangaben wurde die Schichtdicke des jeweiligen PVD-Metalleffektpigmentes bestimmt. Als Standard wurde jeweils ein Metall wie Aluminium oder Chrom bzw. deren Oxide verwendet. Man kann einen gewissen systematischen Fehler dadurch erhalten, dass sich die untersuchten PVD-Schichten hinsichtlich ihrer Absputtereigenschaften nicht notwendigerweise wie die Standardmaterialien verhalten müssen.

Die Konzentrationsverläufe der Sauerstoff-, Metall- und Kohlenstoffgehalte über die aus der Sputterrate ermittelte Schichtdicke der auf den Substratfolien aufgedampften PVD-Schichten der erfindungsgemäßen Beispiele 1 bis 6 und von Vergleichsbeispiel 8 sind in den Abbildungen 14a, 15a, 16a, 17a, 18a, 19a und 20a dargestellt. Der Kohlenstoffgehalt stammt entweder aus oberflächlichen Kontaminationen oder aus der Substratfolie, wenn die aufgedampfte Beschichtung durchgesputtert ist. Auf die Darstellung der Konzentration an Stickstoff wurde verzichtet, da diese immer weit unterhalb von 2 Atom-% lag und keinerlei Gradient aufwies.

Für die Metallkonzentration wurde zum einen der gesamte Metallanteil in Atom-% angegeben. Aus der Auswertung der Hochauflösungsspektren wurde der Anteil an elementarem Metall ermittelt, der als zusätzliche Größe in den Abbildungen angegeben ist. Die hier dargestellten Konzentrationen beziehen sich immer auf die Summe der Konzentrationen der gemessenen Elemente Sauerstoff, Metall, Kohlenstoff und Stickstoff.

In Tabelle 3 sind die Ergebnisse der Auswertungen der Schichtdickenprofile dargestellt. Diese werden im Folgenden näher erläutert.

Allen Abbildungen ist gemeinsam, dass das Kohlenstoffsignal zunächst (vor dem Sputtern) einen gewissen Wert aufwies. Dieses Signal entstammte Kontaminationen der Pigmentoberfläche mit organischem Material und hatte keine analytische Bedeutung. Dem ersten Anfangsbereich war ebenfalls zu entnehmen, dass stets ein relativ hoher Sauerstoffgehalt und korrespondierend ein relativ niedriger Metallanteil vorlag. Dieser Befund war auf die sich natürlich bildende Metalloxidschicht zurückzuführen. Diese Werte wurden für die weitere Auswertung - insbesondere für die Betrachtung von Konzentrationsgradienten - nicht weiter berücksichtigt.

Im Inneren des PVD-Metalleffektpigments ist das Kohlenstoffsignal erwartungsgemäß sehr klein (< 1 Atom-%), um dann plötzlich sehr stark anzuwachsen. Hier sind die aufgedampften Metall/Metalloxidschichten durch das Sputtern abgetragen worden und entsprechend wurde die darunterliegende Polymerfolie messtechnisch erfasst. Anhand der Steigung des Kohlenstoffsignals und des korrespondierenden Abfalls insbesondere des Metallsignals konnte anhand des Schnittpunkts der Ausgleichsgeraden die Gesamtschichtdicke bestimmt werden (beispielhaft gezeigt in Abb. 14a). Diese Werte sind in Tabelle 3 eingetragen. Ebenfalls finden sich dort die Werte der Pigmentschichtdicken, die mittels REM bestimmt wurden. Da die Messungen mit Reflektionselektronenmikroskopie (REM) eine höhere Genauigkeit aufwiesen, wurde ein Korrekturfaktor ermittelt. Alle weiteren Angaben hinsichtlich Schichtdicken und/oder Konzentrationsgradienten von Einzelschichten der analysierten mit PVD beschichteten Folien in Tabelle 3 beziehen sich immer auf die mit diesem Faktor korrigierten Werte. Somit wurden die mittels Sputterraten bestimmten Schichtdicken immer zu jenen der REM-Messungen normiert.

Weiterhin wurden die durchschnittlichen Gehalte an Sauerstoff der PVD-Schichten bestimmt. Dies erfolgte zu einen durch die EDX-Methode, die auch schon in der DE 10 2007 007 908 A1 beschrieben wurde. Zum anderen wurden die ESCA-Daten gemittelt. Beide Werte zeigten relativ gute Übereinstimmungen und liegen in einem Bereich von 40 bis 46 Atom-%.

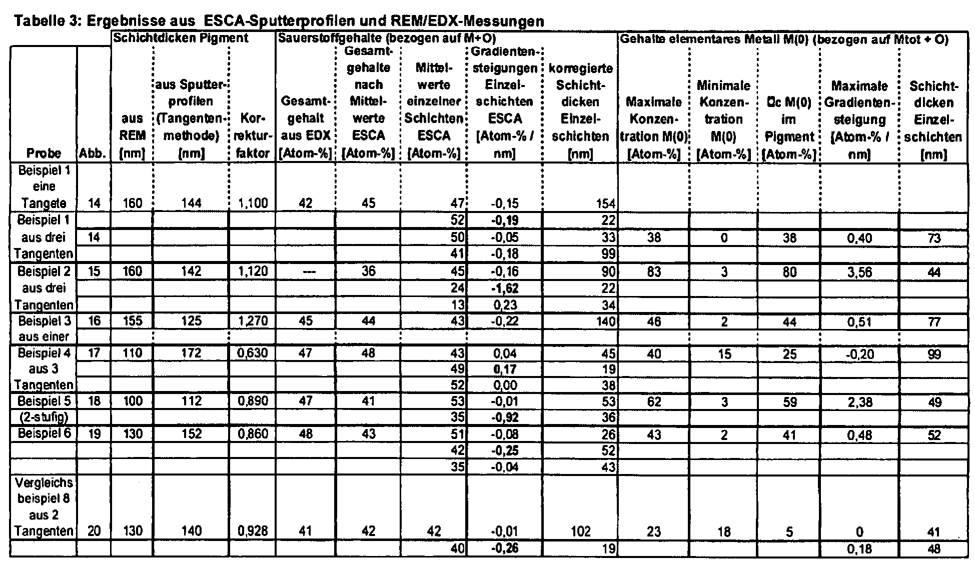

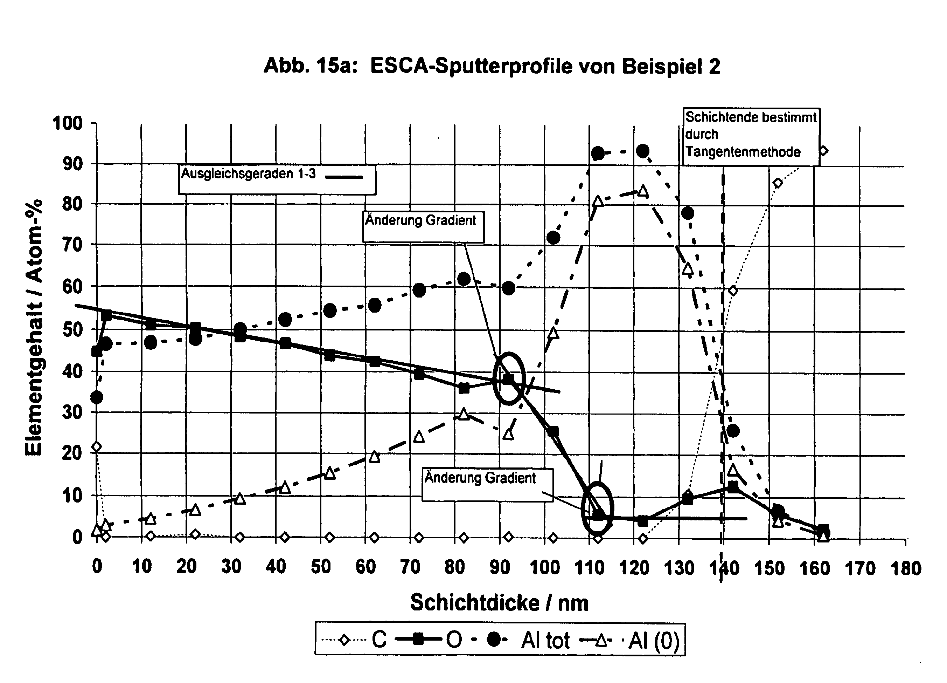

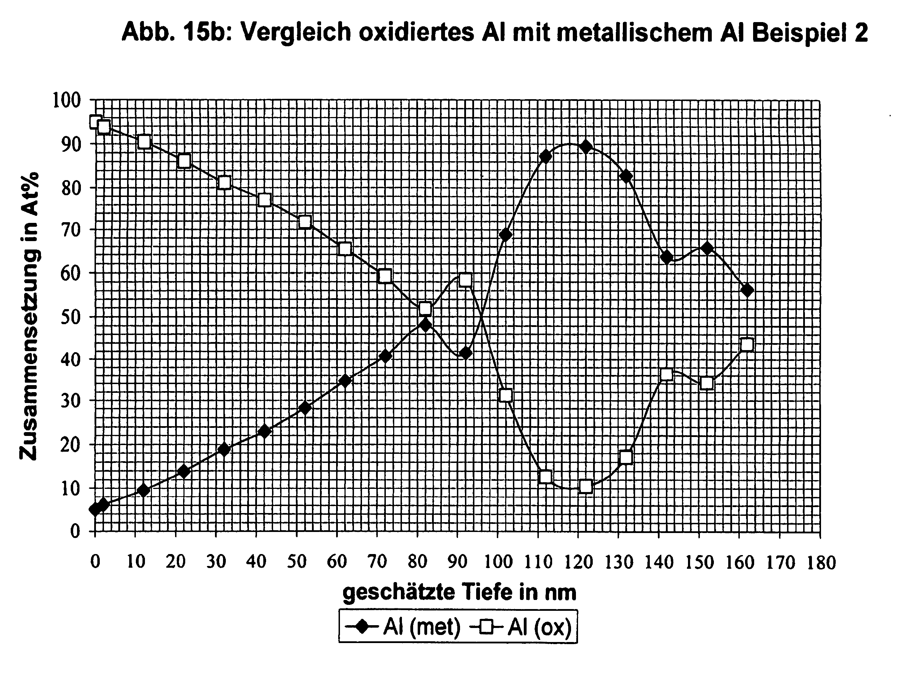

Weiterhin wurden die einzelnen PVD-Schichten oder PVD-Schichtpakete hinsichtlich ihres Aufbaus analysiert. Dabei wurde zum einen der Konzentrationsverlauf der Sauerstoffkonzentration und zum anderen jener der Konzentrationsverlauf an elementarem Metall herangezogen. In den Abbildungen 14 und 15 ist beispielhaft gezeigt, wie einzelne Bereiche mit unterschiedlichen Gradienten durch Ausgleichsgeraden unterschieden werden können. Daraus konnten Abschnitte von einzelnen Bereichen mit unterschiedlichen Gradienten anhand der Schnittpunkte der Ausgleichsgeraden, sowie die Steigungen der Ausgleichsgeraden, den Konzentrationsgradienten, bestimmt werden.

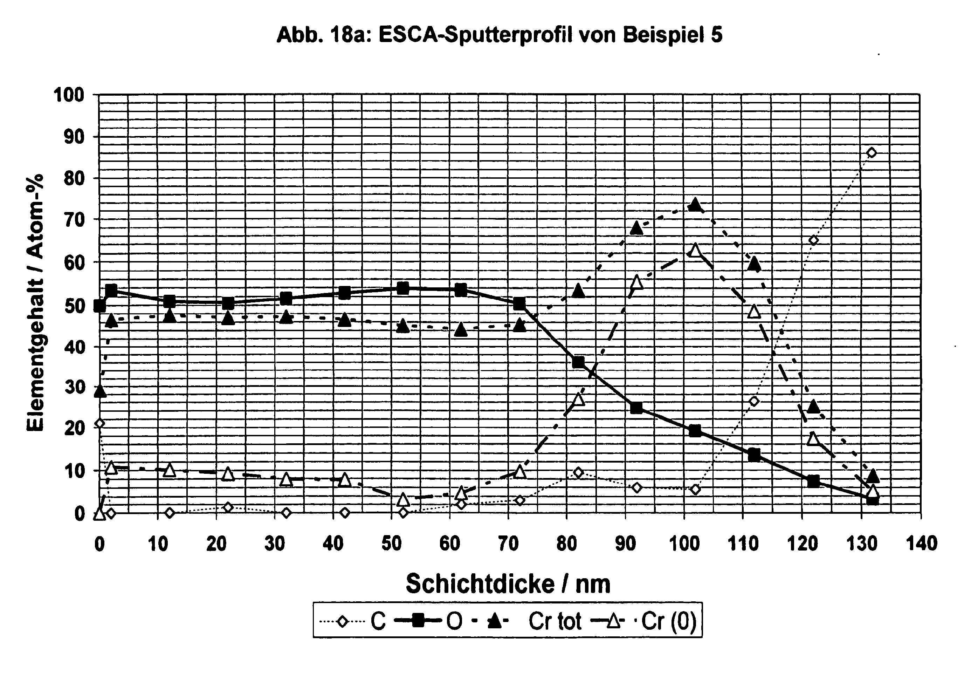

Dabei gab es bei manchen PVD-Schichten bzw. PVD-Schichtpaketen mehrere Interpretationsmöglichkeiten. So konnte die einschichtige PVD-Schicht des erfindungsgemäßen Beispiels 1 einen durchgängigen, weitgehend linearen Gradient der Sauerstoffkonzentration oder drei leicht unterschiedliche Gradienten aufweisen. Entsprechende Werte für beide Interpretationen wurden in Tabelle 3 übernommen. Aufgrund des geringen Gradientenunterschiedes erschien die Interpretation in Form eines einzigen Gradienten als angemessen. Der Aufbau der zweischichtigen PVD-Metalleffektpigmente gemäß den erfindungsgemäßen Beispielen 2 und 5 ist in den Abbildungen 15a bzw. 18a gut zu erkennen durch eine signifikante Änderung der Steigung (Anstieg) im Gehalt an elementarem Metall (Al(0) bzw. Cr(0)) bzw. durch die signifikante Änderung der Steigung (Abfall) des Gehaltes an Sauerstoff (O) über die Schichtdicke.

In der PVD-Schicht gemäß den erfindungsgemäßen Beispielen 4 und 6 können jeweils drei Gradienten interpretiert werden.

Alle dem Betrag nach höchsten Gradientensteigungen der Sauerstoffkonzentration sind in Tabelle 3 jeweils fett markiert; von den Gradienten des elementaren Metalls sind nur die jeweils höchsten Werte eingetragen.

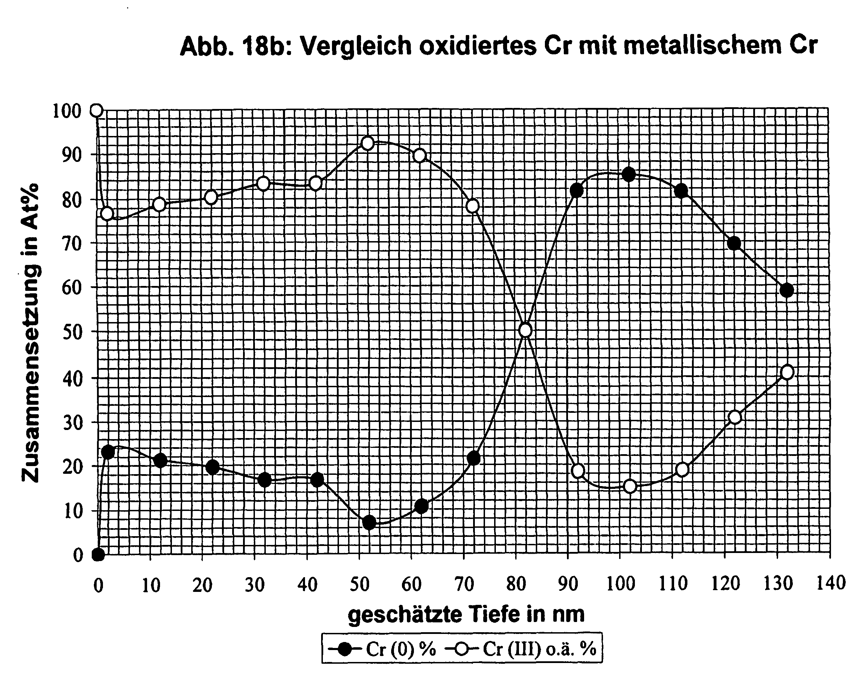

Die mittels eines zweistufigen Verfahrens hergestellten PVD-Schichten der erfindungsgemäßen Beispiele 2 und 5 enthielten eine PVD-Metallschicht. In den Abbildungen 15 und 18 ist der starke Anstieg der Konzentration an elementarem Metall erkennbar. Die Werte steigen jedoch nicht auf 100 % und stets ist noch ein restlicher Sauerstoffanteil erkennbar.

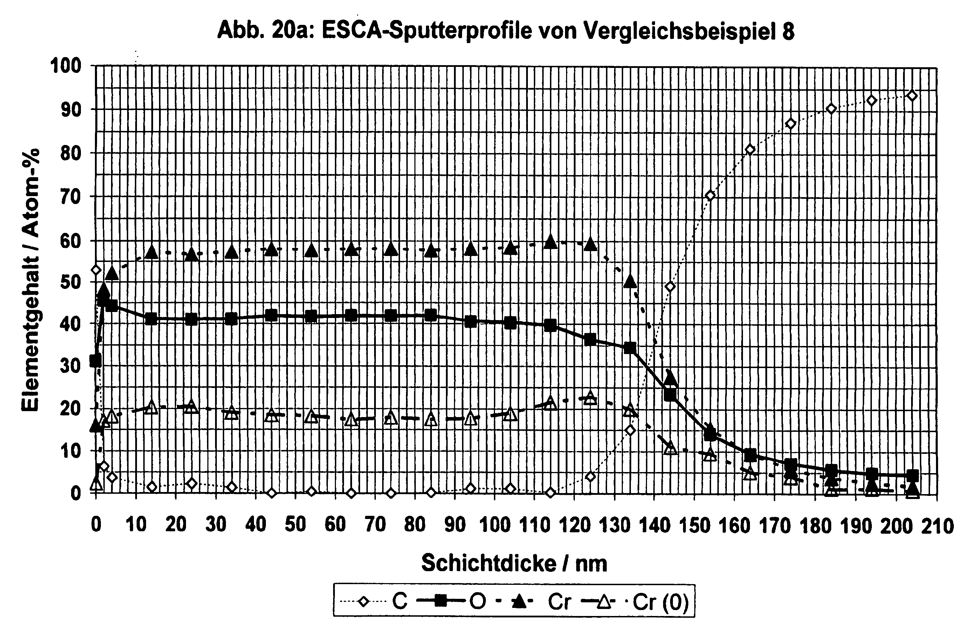

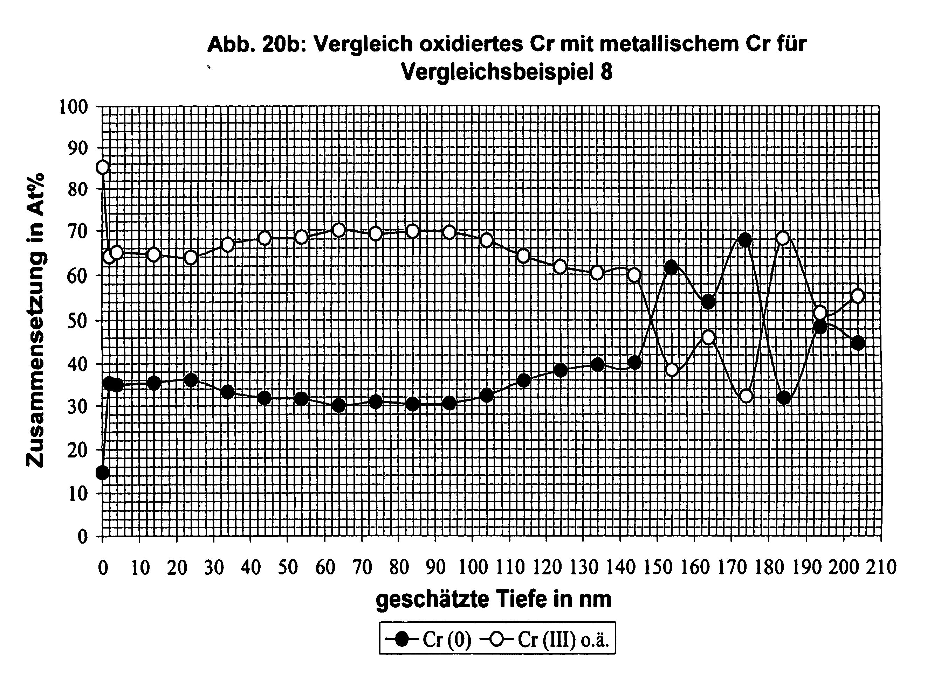

Das Vergleichsbeispiel 8 entspricht Beispiel 1 der DE 10 2007 007 908 A1 (Abbildung 20) und zeigte einen großen Schichtdickenbereich mit einer praktisch konstanten Sauerstoffkonzentration bzw. Konzentration an elementarem Metall (Cr(0)). Lediglich am Ende der PVD-Schicht bei etwa 110 bis 120 nm Schichtdicke stieg der Wert leicht an, wobei parallel hierzu das C-Signal anstieg und mithin das Ende des Pigments erreicht wurde, weshalb dieser Anstieg der Metallkonzentration ein Artefakt darstellt.

Der Vollständigkeit halber wurde auch dieser schmale Endbereich ausgewertet und der sich ergebende artifizielle leichte Konzentrationsgradient an Sauerstoff bestimmt. Diese PVD-Schicht weist mithin eine weitgehend konstante Sauerstoffkonzentration auf, wie in der DE 10 2007 007 908 A1 beschrieben.

Tabelle 3 ist zu entnehmen, dass der maximale Sauerstoffkonzentrationsgradient bei der PVD-Schicht bzw. den PVD-Schichten (PVD-Metalleffektpigmenten) gemäß den erfindungsgemäßen Beispielen stets höher ist als bei Vergleichsbeispiel 8.

Die vorstehend beschriebenen Messungen mittels TEM hatten ergeben, dass das elementare Metall in Form kleiner Nanopartikel vorliegt, die in die Metalloxidmatrix eingebettet sind. Für die optischen Eigenschaften des PVD-Metalleffektpigments waren vor allem die asymmetrischen Konzentrationsverteilungen dieser metallischen Nanopartikel im PVD-Metalleffektpigment maßgeblich.

Neben den Gradientensteigungen wurden vor allem die maximalen und minimalen Konzentrationen sowie der Unterschied ΔCM(0) (CM(0): Konzentration an elementarem Metall) dieser Konzentrationen in den PVD-Schichten ermittelt. Insbesondere bei den maximalen Konzentrationen CM(0) und bei den Unterschieden zeigten sich signifikante Unterschiede bei den PVD-Schichten gemäß den erfindungsgemäßen Beispielen im Hinblick auf die PVD-Schicht gemäß Vergleichsbeispiel 8.

Die PVD-Schichten gemäß den erfindungsgemäßen Beispielen zeigten wesentlich höhere maximale Konzentrationen CM(0) und wesentlich höhere Konzentrationsunterschiede ΔCM(0) auf als die PVD-Schicht gemäß Vergleichsbeispiel 8, die weitgehend homogen war. Bei der PVD-Schicht gemäß Vergleichsbeispiel 8 betrug der artifizielle Konzentrationsunterschied ΔCM(0) 5 Atom-% (siehe Tabelle 3).

Im Gegensatz zu den weitgehend homogen aufgebauten PVD-Metalleffektpigmenten gemäß dem Stand der Technik wiesen die erfindungsgemäßen PVD-Metalleffektpigmente größere Konzentrationsunterschiede über die Schichtdicke auf, wobei der Unterschied ΔCM(0) zwischen den Außenflächen des erfindungsgemäßen PVD-Metalleffektpigments wenigstens 10 Atom-%, vorzugsweise wenigstens 15 Atom-%, weiter bevorzugt wenigstens 20 Atom-% (siehe Tabelle 3) betrug.

Erfindungsgemäß ist nicht wesentlich, ob in einer PVD-Schicht ein oder mehrere Gradienten in Bezug auf die Konzentration an elementarem Metall vorliegen. Wesentlich ist hingegen ob ein Konzentrationsgefälle an elementarem Metall über die gesamte PVD-Schichtdicke vorliegt. Dabei können dazwischen Abschnitte mit konstanter Konzentration oder auch leicht fallender Konzentration liegen.

### Teil E: Farbmetrische Bewertung der PVD-Schichten gemäß den erfindungsgemäßen Beispielen in Bezug auf die PVD-Schichten gemäß den Vergleichsbeispielen (Beispiele mit weitgehend homogener Zusammensetzung ohne Gradient an elementarem Metall)

Im Folgenden wird das farbmetrische Verhalten der PVD-Metalleffektpigmente gemäß den erfindungsgemäßen Beispielen und gemäß den Vergleichsbeispielen dargestellt.

Hierzu wurde das jeweilige PVD-Metalleffektpigment in jeweils 2 g eines konventionellen Nitrocelluloselackes (Dr. Renger Erco Bronzemischlack 2615e; Fa. Morton) eingerührt. Dabei wurde das PVD-Metalleffektpigment vorgelegt und anschließend mit einem Pinsel in den Lack dispergiert.

Der fertige Lack wurde auf einem Rakelabzugsgerät mit einer Nassfilmdicke von 50 µm auf Prüfkarten Nr. 2853 der Fa. Byk Gardner (Schwarz-Weiß-Kontrastpapier) appliziert.

Die Pigmentierungshöhe (Gehalt an PVD-Metalleffektpigment) wurde so gewählt, dass sich eine deckende Schicht ergab. Hierdurch geht in die farbmetrischen Daten der Einfluss des Untergrundes nicht ein.

Die Rakelabzüge wurden farbmetrisch gemäß Herstellerangaben vermessen (Gerät Optronic Multiflash, Berlin, Deutschland). Dabei wurde unter einem konstanten Winkel von 45° eingestrahlt und die CIELAB L*-, a*- und b*-Werte bei Beobachtungswinkeln von 15°, 20°, 25°, 45°,55°, 70°, 75° und 110° relativ zum Glanzwinkel bestimmt (Lichtquelle: D65).

In Tabelle 4a und 4b wurden die farbmetrischen Daten zu den PVD-Metalleffektpigmenten gemäß den erfindungsgemäßen Beispielen 1-10 und gemäß den Vergleichsbeispielen 1-8 zusammengefasst.

**Tabelle 4a: Farbmetrische Daten der Rakelabzüge der PVD-Metalleffektpigmente der erfindungsgemäßen Beispiele**

| **Probe** | **Pigmentierungshöhe [%]** | **D 50: [µm]** | **Helligkeiten** | | | | **Subjektiver Farbeindruck** |
|---|---|---|---|---|---|---|---|
| | | | L15 | L45 | L110 | Flop | |
| erf.-gem. Beispiel 1 | 5 | 15 | 96,9 | 10,2 | 3,3 | 56,1 | Gelbstichig grau metallisch glänzend |
| erf.-gem. Beispiel 2 | 4,7 | 18,5 | 110,7 | 14,2 | 6,9 | 47,6 | Silber grau metallisch glänzend |
| erf.-gem. Beispiel 3 | 4,7 | ca. 15 | 114,7 | 22,8 | 11,5 | 31,4 | Silber grau leichtrot metallisch |
| erf.-gem. Beispiel 4 | 8 | 11,3 | 77,5 | 17,1 | 4,2 | 27,5 | Leicht grau grünblau metallisch glänzend |
| erf.-gem. Beispiel 5 | 6,5 | 9,6 | 103,1 | 26,1 | 6,1 | 26,1 | Hell grau grünblau metallisch glänzend |
| erf.-gem. Beispiel 6 | 9,5 | ca. 15 | 76,2 | 7,6 | 1,8 | 56,4 | Stahlgrau glänzend metallisch |
| erf.-gem. Beispiel 7 | 11 | 15,3 | | | | | Silber grau metallisch glänzend |
| erf.-gem. Beispiel 8 | 5,2 | 12 | 121,6 | 36,6 | 19 | 20,8 | Bläulich hellgrau metallisch glänzend |
| erf.-gem. Beispiel 9 | 5,8 | 13 | 105,7 | 58,9 | 44,8 | 7,7 | Bläulich hell metallisch |
| erf.-gem. Beispiel 10 | 6,8 | 12 | 86,0 | 64,1 | 52,7 | 3,7 | Bläulich hell metallisch |

**Tabelle 4b: Farbmetrische Daten der Rakelabzüge der PVD-Metalleffektpigmente der Vergleichsbeispiele**

| **Probe** | **Pigmentierungs-höhe [%]** | **D 50: [µm]** | **Helligkeiten** | | | | **Subjektiver Farbeindruck** |
|---|---|---|---|---|---|---|---|
| | | | L15 | L45 | L110 | Flop | |
| Vgl.-Beispiel 1 | 2,9 | ca. 15 | 102,7 | 23,2 | 6,7 | 28,5 | Hellgrau glänzend |
| Vgl.-Beispiel 2 | 4,3 | ca. 15 | 104,8 | 22,9 | 7,1 | 29,4 | Grüngrau glänzend |
| Vgl.-Beispiel 3 | 5,3 | ca. 15 | 102,3 | 21,1 | 6,6 | 30,9 | Beige glänzend |
| Vgl.-Beispiel 4 | 6,2 | ca. 15 | 95,1 | 19,8 | 6,8 | 29.9 | Braun glänzend |
| Vgl.- Beispiel 5 | 7,1 | ca. 15 | 90,5 | 15,1 | 4,5 | 36,5 | Rotbraun glänzend |
| Vgl.-Beispiel 6 | 8,1 | ca. 15 | 84,7 | 12,4 | 3,5 | 40,7 | Braunviolett glänzend |
| Vgl.-Beispiel 7 | 8,9 | ca, 15 | 82,5 | 11,3 | 3,3 | 43,0 | Violettschwarz glänzend |
| Vgl.-Beispiel 8 | 9,1 | ca. 15 | 80,0 | 10,2 | 2,6 | 45,4 | Stahlblau glänzend |

Die farbmetrischen Eigenschaften der PVD-Metalleffektpigmente der erfindungsgemäßen Beispiele und Vergleichsbeispiele waren hinsichtlich des Helligkeitsflops im Wesentlichen vergleichbar. Jedoch zeigten die erfindungsgemäßen PVD-Metalleffektpigmente meist einen stärken graumetallischen Charakter. Dieser wies jedoch interessanterweise einen sehr hohen Helligkeitsflop auf, was bislang im Stand der Technik nicht zugänglich war.

Im Unterschied zu den PVD-Metalleffektpigmenten gemäß den Vergleichsbeispielen konnten alle erfindungsgemäßen PVD-Metalleffektpigmente mit wesentlich höheren Bandgeschwindigkeiten und einer erheblich größeren Reproduzierbarkeit hergestellt werden. Da Metalleffektpigmente ein Produkt darstellen, das in großen Mengen und guter Reproduzierbarkeit hergestellt werden können muss, stellt die vorliegende Erfindung einen signifikanten wirtschaftlichen Fortschritt dar. Darüber hinaus ist es nunmehr möglich graue und gräuliche PVD-Metalleffektpigmente bereitzustellen, was bislang nicht möglich war.

Abbildung 21 zeigt in einer CIELAB a*, b*- Darstellung die farbmetrische Darstellung erfindungsgemäßer PVD-Metalleffektpigmente und von PVD-Metalleffektpigmenten aus Vergleichsbeispielen.

Aus Abbildung 21 geht hervor, dass sich die erfindungsgemäßen PVD-Metalleffektpigmente gemäß den erfindungsgemäßen Beispielen 8, 9 und 10 unabhängig von ihren jeweiligen Gesamtschichtdicken am gleichen Farbort befinden. Bei den PVD-Metalleffektpigmenten gemäß den Vergleichsbeispielen mit jeweils nur einer Schicht mit weitgehend homogener Zusammensetzung führt die Veränderung der Schichtdicke zu einem Durchlaufen des kompletten Farbraums siehe Abbildung 21.

Der Vergleich des PVD-Metalleffektpigmentes gemäß dem erfindungsgemäßen Beispiel 8 mit dem PVD-Metalleffektpigment des Vergleichsbeispiels 8 zeigt, dass der Farbort annähernd gleich ist, jedoch im Unterschied die Gesamtschichtdicke des PVD-Metalleffektpigmentes von erfindungsgemäßem Beispiel 8 um 45 nm geringer ist als die des PVD-Metalleffektpigmentes gemäß Vergleichsbeispiel 8.

### Vorteile der erfindungsgemäßen PVD-Metalleffektpigmente

Die erfindungsgemäßen PVD-Metalleffektpigmente weisen allgemein überraschende Vorteile auf:
Es können preiswert beschichtete und/oder erhältliche einseitig oder beidseitig beschichtete metallisierte Folien, beispielsweise Alu-Folien verwendet werden, die vorzugsweise mit einer Trennschicht zwischen Metallschicht, beispielsweise Aluminiumschicht, und Substrat, üblicherweise einer Kunststofffolie in Bandform, versehen sind.

Auf diese Metallschicht, beispielsweise Aluminiumschicht, kann sodann mit einem beispielsweise einschichtigen PVD-Beschichtungsvorgang eine weitere Metall/Metalloxidschicht aufgebracht werden, die einen erfindungsgemäßen Gradienten an elementarem Metall aufweist. Beispielsweise kann auf die Aluminiumschicht eine Chromschicht mit einem asymmetrischen Aufbau aus elementarem Chrom in Chromoxid aufgebracht werden bzw. sein.

Durch die Verwendung von nur einer 60 nm Chrom/oxidischen Chrom-Schicht auf der genannten Aluminiumfolie wird die Produktivität verdoppelt; Materialkosten für Cr werden halbiert. Diese Vorteile können ein Zweischichtverfahren preiswerter gestalten als ein einschichtiges Bandverfahren, bei dem eine Schichtdicke von oxidischem Cr mit weitgehend homogener Zusammensetzung von 130 nm benötigt wird.

Ein weiterer verfahrenstechnischer Vorteil ist durch eine geringere Wärmebelastung während der Beschichtung mit Metall/Metalloxid, beispielsweise Chrom/Chromoxid, auf der Folie gegeben, da sich diese durch die Erhöhung der Bandgeschwindigkeit die thermische Belastung verringert. Beispielsweise wird bei einer Verdopplung der Bandgeschwindigkeit die thermische Belastung der Folie bzw. des Substrates halbiert.

Selbstverständlich ist dieser Vorteil nicht auf die spezielle Kombination von Aluminiumfolie und Chrom/Chromoxid beschränkt. Mithin kann allgemein ein mit einem Metall vorbeschichtetes Substrat, vorzugsweise einem Kunststoffband, verwendet werden und dieses vorbeschichtete Substrat nachfolgend mit einer asymmetrischen PVD-Schicht aus Metalloxid und elementarem Metall mittels PVD beschichtet werden.

Aufgrund des asymmetrischen Aufbaus mit einer metallischeren ersten Außenfläche und einer oxidreicheren zweiten Außenfläche werden in einer Applikation, bei der statistisch 50 % der PVD-Metalleffektpigmente mit der metallischeren Außenfläche und 50 % der PVD-Metalleffektpigmente mit der oxidreicheren Außenfläche dem Auge eines Betrachters zugewandt sind, dezentere Farbtöne, insbesondere in dem erwünschten Graubereich, erhalten, die gleichwohl einen starken Hell-Dunkel-Flop aufweisen. Aufgrund dieser besonderen Verteilung der asymmetrischen PVD-Metalleffektpigmente werden etwaige Farbschwankungen, die durch die im Metalloxid eingebetteten Cluster aus elementarem Metall hervorgerufen werden können, aufgrund der Asymmetrie des PVD-Metalleffektpigmente ausgeglichen bzw. gedämpft, was bei symmetrischen PVD-Pigmenten nicht möglich ist.

Aufgrund einer metallischeren Außenfläche der erfindungsgemäßen PVD-Metalleffektpigmente besitzen diese ein hervorragendes spezifisches Deckungsvermögen, d.h. eine hohe Abdeckung eines Untergrundes pro Gewichtseinheit an Pigment.

Das erfindungsgemäße Verfahren kann äußerst vorteilhaft in einem Bandlauf erfolgen, wobei die Kontrolle der aufgebrachten asymmetrischen PVD-Schicht(en) sehr gut über Reflexionsmessung erfolgen kann. Auch bei Herstellung eines zweischichtigen PVD-Metalleffektpigmentes ist dies möglich, da die optisch wirksame asymmetrische PVD-Schicht weitgehend nicht von der Schichtstärke einer vorhandenen zweiten metallischen PVD-Schicht abhängig ist.

Die erfindungsgemäßen PVD-Metalleffektpigmente können mit auch höheren Schichtdicken hergestellt werden und zeigen im Hinblick auf die größere Masse ein besseres Applikationsverhalten im Vergleich zu herkömmlichen PVD-Metalleffektpigmenten, beispielsweise bei Wasserlackanwendungen.

## Patentansprüche

1. Plättchenförmiges PVD-Metalleffektpigment mit einer ersten und einer zweiten Außenfläche,
**dadurch gekennzeichnet,**
**dass** das plättchenförmige PVD-Metalleffektpigment wenigstens eine PVD-Schicht aufweist, wobei die wenigstens eine PVD-Schicht elementares Metall mit Clustern aus elementarem Metall und Metalloxid aufweist, wobei der Gehalt an elementarem Metall in der ersten Außenfläche und in der zweiten Außenfläche des PVD-Metalleffektpigmentes voneinander verschieden ist und sich um wenigstens 10 Atom-% unterscheidet.

2. Plättchenförmiges PVD-Metalleffektpigment nach Anspruch 1,
**dadurch gekennzeichnet,**
**dass** das plättchenförmige PVD-Metalleffektpigment zwei aufeinander angeordnete PVD-Schichten aufweist, die jeweils elementares Metall mit Clustern aus elementarem Metall und Metalloxid aufweisen, wobei der Gehalt an elementarem Metall in der ersten Außenfläche und in der zweiten Außenfläche des PVD-Metalleffektpigmentes voneinander verschieden ist und sich um wenigstens 10 Atom-% unterscheidet.

3. Plättchenförmiges PVD-Metalleffektpigment nach Anspruch 1 oder 2,
**dadurch gekennzeichnet,**
**dass** das plättchenförmige PVD-Metalleffektpigment drei oder mehr aufeinander angeordnete PVD-Schichten aufweist, wobei sämtliche PVD- Schichten jeweils elementares Metall mit Clustern aus elementarem Metall und Metalloxid aufweisen und der höchste Gehalt an elementarem Metall entweder in der ersten oder in der zweiten Außenfläche des PVD-Metalleffektpigmentes vorliegt und wobei der Gehalt an elementarem Metall in der ersten Außenfläche und in der zweiten Außenfläche des PVD-Metalleffektpigmentes voneinander verschieden ist und sich um wenigstens 10 Atom-% unterscheidet.

4. Plättchenförmiges PVD-Metalleffektpigment nach einem der vorherigen Ansprüche,
**dadurch gekennzeichnet,**
**dass** sich in der wenigstens einen PVD-Schicht der Gehalt an elementarem Metall kontinuierlich über die Dicke der PVD-Schicht ändert.

5. Plättchenförmiges PVD-Metalleffektpigment nach einem der vorherigen Ansprüche,
**dadurch gekennzeichnet,**
**dass** sich zwischen zwei aufeinander folgenden PVD-Schichten der Gehalt an elementarem Metall diskontinuierlich ändert.

6. Plättchenförmiges PVD-Metalleffektpigment nach einem der vorherigen Ansprüche,
**dadurch gekennzeichnet,**
**dass** der Gehalt an elementarem Metall in der ersten Außenfläche des Metallpigmentes in einem Bereich von 0 bis 60 Atom-% liegt und der Gehalt an elementarem Metall in der zweiten Außenfläche des Metallpigmentes vorzugsweise in einem Bereich von 30 bis 95 Atom-% liegt,
mit der Maßgabe,
**dass** der Unterschied in dem Gehalt an elementarem Metall zwischen der ersten und der zweiten Außenfläche des PVD-Metalleffektpigmentes wenigstens 10 Atom-% beträgt.

7. Plättchenförmiges PVD-Metalleffektpigment nach einem der vorherigen Ansprüche,
**dadurch gekennzeichnet,**
**dass** die Metalle der wenigstens zwei aufeinander angeordneten PVD-Schichten gleich oder voneinander verschieden sind und aus der Gruppe, die aus Aluminium, Magnesium, Chrom, Silber, Kupfer, Gold, Zink, Zinn, Mangan, Eisen, Kobalt, Nickel, Titan, Tantal, Molybdän, deren Mischungen und deren Legierungen besteht, ausgewählt sind.

8. Plättchenförmiges PVD-Metalleffektpigment nach einem der vorherigen Ansprüche,
**dadurch gekennzeichnet,**
**dass** das elementare Metall wenigstens teilweise in Form von Clustern vorliegt, wobei die Cluster vorzugsweise eine durchschnittliche Teilchengröße aus einem Bereich von 1 nm bis 10 nm aufweisen.

9. Verwendung der plättchenförmigen PVD-Metalleffektpigmente nach einem der vorherigen Ansprüche in Coatings, Lacken, Automobillacken, Pulverlacken, Druckfarben, leitfähigen Lackformulierungen, Digitaldruckfarben, Kunststoffen oder kosmetischen Formulierungen.

10. Beschichtungsmittel,
**dadurch gekennzeichnet,**
**dass** das Beschichtungsmittel plättchenförmige PVD-Metalleffektpigmente nach einem der Ansprüche 1 bis 8 enthält.

11. Beschichteter Gegenstand,
**dadurch gekennzeichnet,**
**dass** der Gegenstand mit plättchenförmigen PVD-Metalleffektpigmenten nach einem der Ansprüche 1 bis 8 oder mit einem Beschichtungsmittel nach Anspruch 10 versehen ist.

12. Verfahren zur Herstellung eines plättchenförmigen PVD-Metalleffektpigmentes, **dadurch gekennzeichnet,**
**dass** das Verfahren folgende Schritte umfasst:
(a) Bedampfen eines linear bewegten Substrates in einer einen Bedampfungsabschnitt aufweisenden Vakuumkammer mittels reaktiver physikalischer Dampfabscheidung (PVD) mit wenigstens einem Metall in Gegenwart von Sauerstoff, so dass sich ein Teil des Metalls mit Sauerstoff unter Bildung von Metalloxid umsetzt und nicht umgesetztes Metall und gebildetes Metalloxid über den Bedampfungsabschnitt asymmetrisch verteilt in Bezug auf die Bewegungsrichtung des linear bewegten Substrats abgeschieden werden unter Erhalt einer PVD-Schicht oder mehrerer aufeinander angeordneter PVD-Schichten.
(b) Ablösen der aufgedampften PVD-Schicht(en),
(c) Zerkleinern der abgelösten PVD-Schicht(en),
(d) optional Überführen der zerkleinerten PVD-Schicht(en) in eine Dispersion oder Paste.

13. Verfahren zur Herstellung des plättchenförmigen PVD-Metalleffektpigmentes nach Anspruch 12,
**dadurch gekennzeichnet,**
**dass** im Schritt (a) das Bedampfen eines linear bewegten Substrates in einer Vakuumkammer mittels physikalischer Dampfabscheidung (PVD) mit wenigstens einem Metall aus wenigstens einer Metalldampfquelle in Gegenwart von Sauerstoff, wobei in Bezug auf die Bewegungsrichtung des Substrates und in Bezug auf die Metalldampfquelle(n) der Sauerstoff räumlich und/oder mengenmäßig asymmetrisch verteilt in die Vakuumkammer eingebracht wird, erfolgt.

14. Verfahren nach Anspruch 12,
**dadurch gekennzeichnet,**
**dass** im Schritt (a) der Sauerstoff über eine Zugabevorrichtung weitgehend zentral in den aus wenigstens einer Metalldampfquelle abgegebenen Metalldampf eingeleitet wird, wobei zwischen dem linear beweglichen Substrat einerseits und der Metalldampfquelle sowie der Zugabevorrichtung für Sauerstoff andererseits eine oder mehrere den Bedampfungsabschnitt begrenzende und eine Blendenöffnung bildende Blende(n) vorgesehen sind, wobei die Blendenöffnung in Bezug auf die Metalldampfquelle(n) sowie die Zugabevorrichtung(en) für Sauerstoff asymmetrisch angeordnet ist.

15. Verfahren nach einem der Ansprüche 12 bis 14,
**dadurch gekennzeichnet,**
**dass** das in Schritt (a) verwendete Substrat mit einer, vorzugsweise mittels physikalischer Dampfabscheidung (PVD) aufgebrachten Metallschicht versehen ist oder eine Metallfolie ist.

## Claims

1. Platelet-shaped PVD metal effect pigment with a first and a second external surface,
**characterised in that**
the platelet-shaped PVD metal effect pigment has at least one PVD layer, which at least one PVD layer comprises elemental metal with clusters of elemental metal and metal oxide, and the content of elemental metal in the first external face and in the second external face of the PVD metal effect pigment is different and differs by at least 10 atom %.

2. Platelet-shaped PVD metal effect pigment as claimed in claim 1,
**characterised in that**
the platelet-shaped PVD metal effect pigment has two PVD layers disposed one on top of the other, each of which comprises elemental metal with clusters of elemental metal and metal oxide, and the content of elemental metal in the first external surface and in the second external surface of the PVD metal effect pigment is different and differs by at least 10 atom %.

3. Platelet-shaped PVD metal effect pigment as claimed in claim 1 or 2,
**characterised in that**
the platelet-shaped PVD metal effect pigment has three or more PVD layers disposed one on top of the other, and all the PVD layers each comprise elemental metal with clusters of elemental metal and metal oxide, and the highest content of elemental metal is in either the first or the second external surface of the PVD metal effect pigment and the content of elemental metal in the first external surface and in the second external surface of the PVD metal effect pigment is different and differs by at least 10 atom %.

4. Platelet-shaped PVD metal effect pigment as claimed in one of the preceding claims,
**characterised in that**
the content of elemental metal in the at least one PVD layer varies continuously across the thickness of the PVD layer.

5. Platelet-shaped PVD metal effect pigment as claimed in one of the preceding claims,
**characterised in that**
the content of elemental metal varies discontinuously between two consecutive PVD layers.

6. Platelet-shaped PVD metal effect pigment as claimed in one of the preceding claims,
**characterised in that**
the content of elemental metal in the first external surface of the metal pigment is within a range of from 0 to 60 atom % and the content of elemental metal in the second external surface of the metal pigment is preferably within a range of from 30 to 95 atom %, provided
the difference in the content of elemental metal between the first and the second external surface of the PVD metal effect pigment is at least 10 atom %.

7. Platelet-shaped PVD metal effect pigment as claimed in one of the preceding claims,
**characterised in that**
the metals of the at least two PVD layers disposed one on top of the other are the same or different from one another and are selected from the group comprising aluminium, magnesium, chromium, silver, copper, gold, zinc, tin, manganese, iron, cobalt, nickel, titanium, tantalum, molybdenum, mixtures thereof and alloys thereof.

8. Platelet-shaped PVD metal effect pigment as claimed in one of the preceding claims,
**characterised in that**
the elemental metal is present at least partially in the form of clusters, and the clusters preferably have an average particle size within a range of from 1 nm to 10 nm.

9. Use of the platelet-shaped PVD metal effect pigments as claimed in one of the preceding claims in coatings, varnishes, automobile paints, powder coatings, printing inks, conductive paint formulations, digital printing inks, plastics or cosmetic formulations.

10. Coating substance,
**characterised in that**
the coating substance contains platelet-shaped PVD metal effect pigments as claimed in one of claims 1 to 8.

11. Coated object,
**characterised in that**
the object is provided with platelet-shaped PVD metal effect pigments as claimed in one of claims 1 to 8 or with a coating substance as claimed in claim 10.

12. Method of producing a platelet-shaped PVD metal effect pigment,
**characterised in that**
the method comprises the following steps:
(a) applying vapour to a substrate moved linearly through a vacuum chamber incorporating a vapour application section by means of reactive physical vapour deposition (PVD) with at least one metal in the presence of oxygen so that a part of the metal reacts with oxygen to form metal oxide, and non-reacted metal and the resultant metal oxide are deposited in an asymmetrical distribution in the vapour application section relative to the direction of movement of the linearly moved substrate resulting in a PVD layer or several PVD layers disposed one on top of the other,
(b) detaching the vapour-deposited PVD layer(s),
(c) chopping the detached PVD layer(s),
(d) optionally converting the chopped PVD layer(s) to a dispersion or paste.

13. Method of manufacturing the platelet-shaped metal effect pigment as claimed in claim 12,
**characterised in that**
during step (a), the application of vapour to a substrate moved linearly takes place in a vacuum chamber by means of physical vapour deposition (PVD) with at least one metal from at least one metal vapour source in the presence of oxygen, and the oxygen is introduced into the vacuum chamber in an asymmetrical distribution in terms of space and/or quantity relative to the direction of movement of the substrate and relative to the metal vapour source(s).

14. Method as claimed in claim 12,
**characterised in that**
during step (a), the oxygen is introduced substantially centrally into the metal vapour emitted by at least one metal vapour source by means of a feed-in device, and one or more screen(s) forming a screen aperture and delimiting the vapour application section are disposed between the linearly displaceable substrate on the one hand and the metal vapour source and feed-in device for oxygen on the other hand, and the screen aperture is disposed asymmetrically relative to the metal vapour source(s) and the feed-in device(s) for oxygen.

15. Method as claimed in one of claims 12 to 14,
**characterised in that**
the substrate used in step (a) is provided with a metal layer preferably applied by means of physical vapour deposition (PVD) or is a metal foil.

## Revendications

1. Pigment à effet métallisé PVD en forme de plaquettes avec une première et une deuxième surface extérieure,
**caractérisé en ce que**
le pigment à effet métallisé PVD en forme de plaquettes comporte au moins une couche PVD, au moins ladite couche PVD comportant du métal élémentaire avec des conglomérats en métal élémentaire et en oxyde métallique, les teneurs en métal élémentaire dans la première surface extérieure et dans la deuxième surface extérieure du pigment à effet métallisé PVD étant différentes l'une de l'autre et se distinguant d'au moins 10 % en atomes.

2. Pigment à effet métallisé PVD en forme de plaquettes selon la revendication 1,
**caractérisé en ce que**
le pigment à effet métallisé PVD en forme de plaquettes comporte deux couches PVD disposées l'une sur l'autre, qui comportent chacune du métal élémentaire avec des conglomérats de métal élémentaire et d'oxyde métallique, la teneur en métal élémentaire dans la première surface extérieure et dans la deuxième surface extérieure du pigment à effet métallisé PVD étant différentes l'une de l'autre et se distinguant d'au moins 10 % en atomes.

3. Pigment à effet métallisé PVD en forme de plaquettes selon la revendication 1 ou 2,
**caractérisé en ce que**
le pigment à effet métallisé PVD en forme de plaquettes comporte trois couches PVD ou plus disposées les unes sur les autres, toutes les couches PVD comportant respectivement du métal élémentaire avec des conglomérats de métal élémentaire et d'oxyde métallique, la teneur maximale en métal élémentaire se trouvant soit dans la première surface extérieure, soit dans la deuxième surface extérieure du pigment à effet métallisé PVD et la teneur en métal élémentaire dans la première surface extérieure et dans la deuxième surface extérieure du pigment à effet métallisé PVD étant différentes l'une de l'autre et se distinguant d'au moins 10 % en atomes.

4. Pigment à effet métallisé PVD en forme de plaquettes selon l'une quelconque des revendications précédentes,
**caractérisé en ce que**
dans au moins ladite couche PVD, la teneur en métal élémentaire varie continûment sur l'épaisseur de la couche PVD.

5. Pigment à effet métallisé PVD en forme de plaquettes selon l'une quelconque des revendications précédentes,
**caractérisé en ce que**
entre deux couches consécutives de PVD, la teneur en métal élémentaire varie de façon discontinue.

6. Pigment à effet métallisé PVD en forme de plaquettes selon l'une quelconque des revendications précédentes,
**caractérisé en ce que**
la teneur en métal élémentaire dans la première surface extérieure du pigment à effet métallisé est comprise dans un intervalle de 0 à 60 % en atome et **en ce que** la teneur en métal élémentaire dans la deuxième couche extérieure du pigment à effet métallisé est comprise de préférence dans un intervalle de 30 à 95 % en atomes,
avec la condition
que la différence dans la teneur en métal élémentaire entre la première et la deuxième surface extérieure du pigment à effet métallisé PVD est d'au moins 10 % en atomes.

7. Pigment à effet métallisé PVD en forme de plaquettes selon l'une quelconque des revendications précédentes,
**caractérisé en ce que**
les métaux desdites au moins deux couches PVD disposées l'une sur l'autre sont identiques ou différents et sont choisis parmi le groupe qui consiste en l'aluminium, le magnésium, le chrome, l'argent, le cuivre, l'or, le zinc, l'étain, le manganèse, le fer, le cobalt, le nickel, le titane, le tantale, le molybdène, leurs mélanges et leurs alliages.

8. Pigment à effet métallisé PVD en forme de plaquettes selon l'une quelconque des revendications précédentes,
**caractérisé en ce que**
le métal élémentaire se présente au moins en partie sous forme de conglomérats, les conglomérats présentant de préférence une taille moyenne de particule dans un intervalle de 1 nm à 10 nm.

9. Utilisation des pigments à effet métallisé PVD en forme de plaquettes selon l'une quelconque des revendications précédentes dans des revêtements, des peintures, des peintures automobiles, des poudres pour revêtement électrostatique, des encres d'imprimerie, des formulations de laques conductrices, des encres d'imprimantes numériques, des plastiques ou des formulations cosmétiques.

10. Produit de revêtement,
**caractérisé en ce que**
le produit de revêtement contient des pigments à effet métallisé PVD en forme de plaquettes selon l'une quelconque des revendications 1 à 8.

11. Objet revêtu,
**caractérisé en ce que**
l'objet est revêtu de pigments à effet métallisé PVD en forme de plaquettes selon l'une quelconque des revendications 1 à 8 ou d'un produit de revêtement selon la revendication 10.

12. Procédé de fabrication d'un pigment à effet métallisé PVD en forme de plaquettes
**caractérisé en ce que**
le procédé comprend les étapes suivantes :
(a) dépôt, depuis une phase vapeur sur un substrat déplacé linéairement dans une chambre à vide comportant une section de dépôt depuis une phase vapeur au moyen d'un dépôt physique réactif depuis la phase vapeur (PVD), d'au moins un métal en présence d'oxygène, de telle sorte qu'une partie du métal réagisse avec l'oxygène moyennant formation d'un oxyde métallique et que le métal n'ayant pas réagi et l'oxyde métallique soient déposés le long de la section de dépôt depuis la phase vapeur selon une répartition asymétrique par rapport à la direction de déplacement du substrat déplacé linéairement, moyennant l'obtention d'une couche PVD ou de plusieurs couches PVD disposées les unes sur les autres,
(b) décollage de la ou des couches PVD déposées depuis la phase vapeur,
(c) fragmentation de la ou des couches PVD décollées,
(d) en option, transformation de la ou des couches PVD fragmentées en une dispersion ou une pâte.

13. Procédé de fabrication du pigment à effet métallisé PVD en forme de plaquettes selon la revendication 12,
**caractérisé en ce que**
dans l'étape (a), le dépôt depuis la phase vapeur sur un substrat déplacé linéairement dans une chambre à vide s'effectue au moyen d'un dépôt physique depuis la phase vapeur (PVD) d'au moins un métal provenant d'au moins une source de vapeur métallique en présence d'oxygène, l'oxygène étant introduit dans la chambre à vide réparti de façon spatialement et/ou quantitativement asymétrique par rapport à la direction de déplacement du substrat et par rapport à la ou aux sources de vapeurs métalliques.

14. Procédé selon la revendication 12,
**caractérisé en ce que**
dans l'étape (a), l'oxygène est introduit de façon sensiblement centrale, via un dispositif d'amenée, dans la vapeur métallique émise par au moins une source de vapeur métallique, sachant qu'un ou plusieurs diaphragmes limitant la section de dépôt depuis la phase vapeur et formant une ouverture de diaphragme sont prévus entre le substrat déplacé linéairement d'une part et la source de vapeur métallique de même que le dispositif d'amenée pour l'oxygène d'autre part, l'ouverture de diaphragme étant disposée asymétriquement par rapport à la ou aux sources de vapeur métallique comme par rapport au(x) dispositif(s) d'amenée pour l'oxygène.

15. Procédé selon l'une quelconque des revendications 12 à 14,
**caractérisé en ce que**
le substrat utilisé dans l'étape (a) est doté d'une couche métallique appliquée de préférence par dépôt physique depuis une phase vapeur (PVD), ou est une feuille métallique.
